(19) Europäisches Patentamt
European Patent Office
Office européen des brevets

(11) **EP 3 663 981 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **19213847.7**

(22) Anmeldetag: **05.12.2019**

(51) Internationale Patentklassifikation (IPC):
**G06V 40/13** (2022.01)    **G06V 10/80** (2022.01)
**G06F 18/25** (2023.01)

(52) Gemeinsame Patentklassifikation (CPC):
**G06V 40/1312; G06F 18/251; G06V 10/803**

(54) **VERFAHREN ZUR ERFASSUNG VON FINGERABDRÜCKEN**

METHOD FOR DETECTING FINGERPRINTS

PROCÉDÉ DE DÉTECTION D'EMPREINTES DIGITALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2018 AT 510832018**

(43) Veröffentlichungstag der Anmeldung:
**10.06.2020 Patentblatt 2020/24**

(73) Patentinhaber: **AIT Austrian Institute of Technology GmbH**
**1210 Wien (AT)**

(72) Erfinder:
• **STROBL, Bernhard**
**1010 Wien (AT)**
• **VOKO, Erich**
**2232 Deutsch Wagram (AT)**
• **WEISS, Christoph**
**1050 Wien (AT)**
• **CYNIBURK, Michael**
**1100 Wien (AT)**
• **FERNANDEZ, Gustavo**
**1030 Wien (AT)**
• **ZOUFAL, Andreas**
**2721 Bad Fischau-Brunn (AT)**
• **WEISSENFELD, Axel**
**1220 Wien (AT)**

(74) Vertreter: **Wildhack & Jellinek**
**Patentanwälte OG**
**Landstraßer Hauptstraße 50**
**1030 Wien (AT)**

(56) Entgegenhaltungen:
**EP-A2- 2 506 189        WO-A1-2018/031900**
**US-A1- 2012 076 369**

• **LABATI RUGGERO DONIDA ET AL: "Contactless fingerprint recognition: A neural approach for perspective and rotation effects reduction", 2013 IEEE SYMPOSIUM ON COMPUTATIONAL INTELLIGENCE IN BIOMETRICS AND IDENTITY MANAGEMENT (CIBIM), IEEE, 16. April 2013 (2013-04-16), Seiten 22-30, XP032486906, ISSN: 2325-4300, DOI: 10.1109/CIBIM.2013.6607909 [gefunden am 2013-09-24]**
• **LIRONG WANG ET AL: "A novel contactless aliveness-testing (CAT) fingerprint sensor", PROCEEDINGS OF SPIE, Bd. 7429, 20. August 2009 (2009-08-20), Seite 742915, XP055360996, US DOI: 10.1117/12.828555 ISBN: 978-1-5106-1533-5**
• **NOH DONGHYUN ET AL: "Empirical study on touchless fingerprint recognition using a phone camera", JOURNAL OF ELECTRONIC IMAGING, SPIE - INTERNATIONAL SOCIETY FOR OPTICAL ENGINEERING, US, Bd. 27, Nr. 3, 1. Mai 2018 (2018-05-01), Seite 33038, XP060107076, ISSN: 1017-9909, DOI: 10.1117/1.JEI.27.3.033038 [gefunden am 2018-06-18]**

**Beschreibung**

Die Erfindung betrifft ein Verfahren zur Erfassung von Fingerabdrücken mit einer eine Bildaufnahmeeinheit umfassenden, insbesondere mobilen tragbaren, Fingerabdruck-Erkennungsanordnung gemäß Patentanspruch 1, einen Datenträger gemäß Patentanspruch 11 und eine Fingerabdruck-Erkennungsanordnung gemäß Patentanspruch 12.

Fingerabdruck-Erkennungssysteme sind biometrische Technologien, die in einer Vielzahl von Anwendungsszenarien weit verbreitet sind.

Die EP 2506189 A2 offenbart ein Verfahren, bei dem Hand- und Fingerabdrücke eines Benutzers aus Bildern eines Bildstapels zusammengesetzt werden, wobei der Benutzer die Hand bewegt und mit einer Bildaufnahmeeinheit Bilder in verschiedenen Fokustiefen aufgenommen werden. Mit einem *proximity sensing system* wird dabei detektiert, ob sich die Hand des Benutzers in einer vorgegebenen Fokusdistanz befindet, um dem Benutzer Feedback geben zu können, wenn sich dessen Hand in einer akzeptablen Position zur Erstellung einer Aufnahme befindet.

Die WO 2018/031900 A1 offenbart ein Verfahren, bei dem mit einer Stereokamera Aufnahmen der Finger und Abstandskarten einzelner *regions of interest* basierend auf den gemessenen Disparitäten erstellt werden. Dabei kann eine Skalierung, perspektivische Korrektur oder eine andere Verarbeitung der *regions of interest* basierend auf den Abständen in diesen Abstandskarten vorgenommen werden.

Bekannte Fingerabdruck-Erkennungssysteme verfügen in der Regel über eine kontaktbasierte Erfassung über z.B. optische oder kapazitive Sensoren. Dies bedeutet, dass der Benutzer, der einen Fingerabdruck abgeben möchte, seinen Finger zur Erfassung des Fingerabdrucks auf den Sensor bzw. dessen Aufnahmebereich legen muss, was von manchen Benutzern als unangenehm oder unhygienisch empfunden wird. Bei der Erfassung von Fingerabdrücken mit derartigen Sensoren treten Probleme auf, da beispielsweise Verzerrungen in den aufgenommenen Abdrücken aufgrund von elastischen Verformungen resultierend aus der Reibung zwischen der Haut an den Fingern und dem Sensor auftreten können. Weiters können mit derartigen Sensoren erstellte Fingerabdruck-Aufnahmen Bereiche mit geringem Kontrast aufweisen, die durch die Eigenschaften der Haut an den Fingern bzw. Feuchtigkeit und Schmutz auf der Sensorplatte bedingt sind.

Weitere Probleme entstehen durch das Zurückbleiben von latenten Fingerabdrücken auf den Sensoren.

Ein weiterer Nachteil bei derartigen kontaktbasierten Erfassungsmethoden ist, dass diese regelmäßig gereinigt werden müssen, um das Zurückbleiben von latenten Fingerabdrücken zu vermeiden bzw. ausreichende hygienische Bedingungen für den Benutzer sicherzustellen.

Aufgabe der Erfindung ist es daher, ein Verfahren und eine Vorrichtung zur Erfassung von Fingerabdrücken bereitzustellen, die eine hohe Erkennungsgenauigkeit aufweisen, während gleichzeitig die aus dem Stand der Technik bekannten Nachteile vermieden werden und die es ermöglichen, Fingerabdruck-Erkennungsanordnungen mit unbekannten technischen Spezifikationen zu verwenden.

Die Erfindung löst diese Aufgabe bei einem Verfahren zur Erfassung von Fingerabdrücken mit einer eine Bildaufnahmeeinheit umfassenden, insbesondere mobilen tragbaren, Fingerabdruck-Erkennungsanordnung gemäß dem Oberbegriff von Patentanspruch 1, wobei die Bildaufnahmeeinheit auf eine Vielzahl von Schärfeebenen scharfstellbar ist, mit den kennzeichnenden Merkmalen des Patentanspruchs 1.

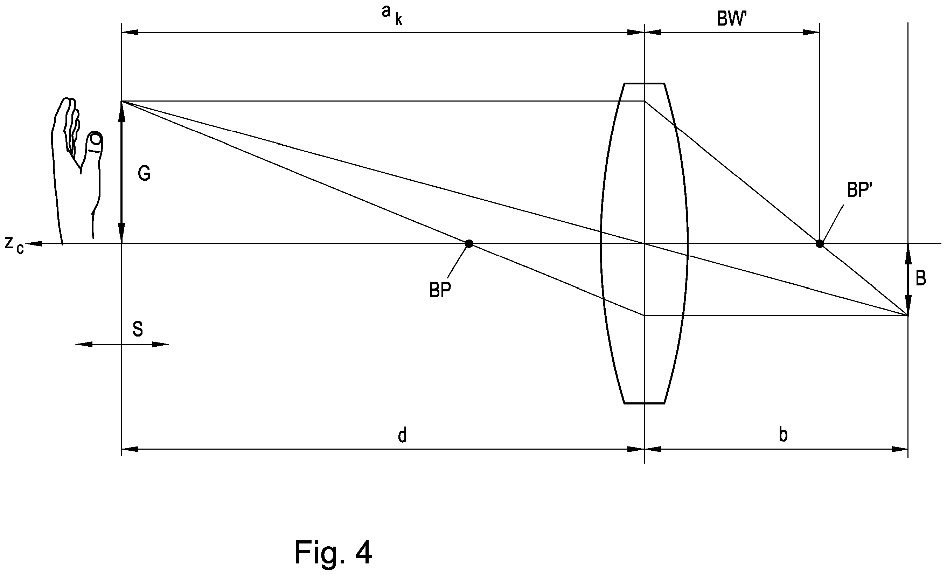

Im Folgenden wird unter Schärfeebene derjenige Bereich relativ zu einer Bildaufnahmeeinheit verstanden, in dem Gegenstände bei Vorgabe einer bestimmten Linseneinstellung scharf auf den Sensor abgebildet werden. In der Praxis handelt es sich dabei nicht um Ebenen, sondern um nur näherungsweise ebene Bereiche, die durch die Form der jeweils verwendeten Linse vorgegeben werden. Jeder Schärfeebene ist dabei ein Schärfeebenen-Abstandswert zugeordnet, der den Abstand zwischen der Linse der Bildaufnahmeeinheit und der Schärfeebene angibt. Die Schärfentiefe eines optischen Systems ist die Länge des $z_c$- Intervalls (siehe Fig. 4), in dem sich die ausreichend scharf abgebildeten Objekte befinden.

Somit ist unter der Schärfeebene, deren Schärfentiefe den ermittelten Objektabstand möglichst eng umschließt, diejenige Schärfeebene zu verstehen, die den Bereich um den ermittelten Objektabstand möglichst scharf abbildet.

Bei kontaktlosen Verfahren zur Erfassung von Fingerabdrücken werden die bei bekannten Erfassungssystemen auftretenden Probleme vermieden, da die Berührung des Sensors bzw. der Bildaufnahmeeinheit mit der Fingerspitze für die Aufnahme von Fingerabdrücken nicht erforderlich ist. Weiters können berührungslose Verfahren zur Aufnahme von Fingerabdrücken die Benutzerakzeptanz steigern, da jeglicher Kontakt mit dem Sensor vermieden wird und hierdurch Vorteile für Hygiene bzw. die Privatsphäre des Benutzers im Vergleich zu kontaktbasierten Sensoren entstehen. Weiters wird durch das erfindungsgemäße berührungslose Verfahren die Erfassungszeit verkürzt, da kontaktbasierte Sensoren regelmäßig gereinigt werden müssen, was bei berührungslosen Sensoren vorteilhafterweise nicht der Fall ist.

Weiters werden die Fingerabdrücke des Benutzers durch die an den Objektabstand angepasste Auswahl der Schärfeebene stets scharf aufgenommen, sodass sie problemlos zum Vergleich mit beispielsweise bereits bestehenden Datenbanken mit kontaktbasiert erstellten Fingerabdrücken herangezogen werden können.

In der Skaliertabelle sind dementsprechend für jeden Schärfeebenen-Abstandswert die entsprechenden Bildauflösungen in DPI hinterlegt, sodass das ermittelte Abbild eines Fingers entsprechend beispielsweise des Schärfeebenen-Abstandswerts, der als optimal erkannten Bildaufnahme des Fingers, die zugehörige Skalierung ausgewählt werden kann. Dies ermöglicht eine Skalierung der Bildaufnahme auf einen bestimmten DPI-Wert (z. B. 500 DPI). Somit können z.B. auch Bauteile für den Verbrauchermarkt verwendet werden.

Um die Verarbeitungszeit bei der Aufnahme von Fingerabdrücken weiter zu verkürzen bzw. den mit der Verarbeitung der Fingerbilder verbundenen Rechenaufwand zu verringern, kann vorteilhafterweise vorgesehen sein, dass vor Schritt d)

- zumindest ein reduziertes Bild mittels Reduktion der Auflösung der zumindest einen in Schritt c) erstellten Bildaufnahme berechnet wird,
- die Position und/oder die Lage eines oder mehrerer Fingerbilder eines oder mehrerer Finger im reduzierten Bild mittels Segmentierung und Anwendung eines Konturverfolgungs-Algorithmus ermittelt werden,
- in der erstellten Bildaufnahme die Positionen des aufgenommenen Fingerbilds oder mehrerer aufgenommenen Fingerbilder, die den im reduzierten Bild ermittelten Fingerbildern jeweils entsprechen, mittels Extrapolation ermittelt werden und
- in Schritt d) die so ermittelten Teile der Bildaufnahme, in denen das aufgenommene Fingerbild eines Fingers ermittelt wurde, skaliert werden, wobei insbesondere vorgesehen ist, dass diejenigen Teile der Bildaufnahme, in denen kein Fingerbild eines Fingers ermittelt wurde, verworfen werden.

Diese Segmentierung und Konturverfolgung auf auflösungsreduzierten Bildaufnahmen gewährleisten, dass die Abbilder der Finger in der Bildaufnahme schnell von der Hintergrundinformation separiert werden können und somit eine schnellere Weiterverarbeitung gewährleistet ist. Eine weitere Reduktion des Rechen- bzw. Zeitaufwands bei der Erfassung von Fingerabdrücken kann in diesem Zusammenhang gewährleistet werden, wenn nur die Bildbereiche einer Bildaufnahme skaliert werden, in denen auch tatsächlich das Abbild eines Fingers ermittelt wurde.

Um einen besonders einfachen Vergleich der aufgenommenen Fingerbilder, die die Fingerabdrücke des Benutzers wiedergeben mit bereits bestehenden Fingerabdruck-Datenbanken, die Fingerabdrücke umfassen, die mit kontaktbasierten Methoden erstellt wurden, kann vorgesehen sein, dass nach Schritt d) eine Konvertierung der aufgenommenen Fingerbilder in ein Fingerprint-Format vorgenommen wird, wobei die so konvertierten Fingerprints die Abbilder der Papillarleisten der Finger, insbesondere in Form eines digitalen Graufarbenbilds, wiedergeben.

Im Folgenden wird unter einem "Fingerprint" das aus einer Bildaufnahme erstellte Äquivalent eines kontaktbasierten Fingerabdrucks in Form eines Digitalbilds, insbesondere eines digitalen Graufarbenbilds, verstanden, das nur die aufgenommenen Abbilder der Papillarleisten enthält.

Um das Einhalten einer exakten Positionierung der Hand bzw. der Finger eines Benutzers in der Fingerabdruck-Erkennungsanordnung zu vermeiden und dennoch zu gewährleisten, dass rasch scharfe Aufnahmen der Finger bzw. der Fingerabdrücke erstellt werden, kann vorgesehen sein, dass zwischen Schritt c) und Schritt d)

- eine Abfolge von Bildaufnahmen erstellt wird, wobei die Bildaufnahmen von der Bildaufnahmeeinheit mit verschiedenen Schärfeebenen-Abstandswerten aufgenommen werden,

  - wobei die Schärfeebenen-Abstandswerte innerhalb eines vorgegebenen Abstandswerteintervalls um den in Schritt a) ermittelten Objektabstand liegen und in vorgegebenen Abstandswertschritten voneinander beabstandet sind, und
  - wobei mit jeder Bildaufnahme der jeweils zugehörige Schärfeebenen-Abstandswert hinterlegt wird,

- ein Bildstapel aus den derart erstellten Bildaufnahmen erstellt wird,
- die Fingerbilder und/oder Fingerprints aus den erstellten Bildaufnahmen ermittelt werden und
- dasjenige Fingerbild und/oder derjenige Fingerprint, insbesondere für jeden aufgenommenen Finger einzeln, ermittelt wird, dessen Qualität anhand zumindest eines vorgegebenen Qualitätsmaßes als optimal erkannt wird,

  - wobei insbesondere vorgesehen ist, dass für die Festlegung der Skalierung in Schritt d) der Schärfeebenen-Abstandswert des als optimal erkannten Fingerbilds und/oder Fingerprints herangezogen wird.

Somit ist sichergestellt, dass, in verschiedenen Schärfeebenen-Abständen Aufnahmen von der Hand bzw. den Finger eines Benutzers, die sich im Erfassungsbereich der Bildaufnahmeeinheit der Fingerabdruck-Erkennungsanordnung befinden, erstellt werden, sodass sichergestellt ist, dass für jeden Finger des Benutzers zumindest eine optimal scharfe Aufnahme erstellt wurde. Durch die Auswahl der Skalierung entsprechend des Abstands der Schärfeebene kann sichergestellt werden, dass die Abbilder der Finger des Benutzers je nach deren Position im Aufnahmebereich der Fingerabdruck-Erkennungsanordnung ideal skaliert werden.

Zur zuverlässigen Ermittlung der optimalen Bildaufnahme im Bildstapel kann vorgesehen sein, dass als Qualitätsmaß für die Ermittlung der optimalen Fingerbilder und/oder Fingerprints im Bildstapel

- die Bildschärfe herangezogen wird, wobei eine relative Reihung ausgewählter, insbesondere aller, Fingerbilder und/oder Fingerprints eines Bildstapels anhand deren Bildschärfe vorgenommen wird und/oder
- die Papillarleisten-Frequenz herangezogen wird,

  - wobei die Papillarleisten-Frequenz für jedes Fingerbild und/oder jeden Fingerprint ermittelt wird und
  - wobei überprüft wird, ob die für das jeweilige Fingerbild und/oder den jeweiligen Fingerprint ermittelte Papillarleisten-Frequenz innerhalb eines vorgegebenen Frequenzintervalls liegt und
  - wobei das jeweilige Fingerbild und/oder der jeweilige Fingerprint verworfen wird, wenn die ermittelte Papillarleisten-Frequenz außerhalb des Frequenzintervalls liegt und/oder

- der NFIQ 2.0-Wert herangezogen wird,

  - wobei für ausgewählte Fingerbilder und/oder Fingerprints ein NFIQ 2.0-Wert zwischen 0 und 100 unter Heranziehung des in Schritt c) ermittelten Schärfeebenen-Abstandswerts und der in Schritt d) skalierten Fingerbilder und/oder Fingerprints ermittelt wird und

- wobei das Fingerbild und/oder der Fingerprint verworfen wird, wenn der ermittelte NFIQ 2.0-Wert unterhalb eines vorgegebenen Schwellenwerts liegt.

Durch die Auswahl anhand zumindest eines dieser, vorzugsweise mehrerer dieser, Kriterien ist sichergestellt, dass optimale Fingerbilder und/ oder Fingerprints zuverlässig ausgewählt werden.

Zur effizienten Bestimmung der Papillarleisten-Frequenz kann bei einem erfindungsgemäßen Verfahren vorgesehen sein, dass die Papillarleisten-Frequenz innerhalb zumindest eines rechteckigen oder quadratischen Fensters in einem Fingerbild und/oder Fingerprint eines Fingers ermittelt wird,

- wobei im Fingerbild und/oder Fingerprint die Abbilder von Papillarleisten anhand der mit den einzelnen Pixeln der Bildaufnahmeeinheit erfassten Helligkeitswerte ermittelt werden,
- wobei das Zentrum des Fensters als Ursprung eines zweidimensionalen Koordinatensystems in der Ebene des Fingerbilds und/oder Fingerprints, eine Koordinatenachse des Koordinatensystems orthogonal zur lokalen Richtung der Papillarleisten und die andere Koordinatenachse parallel zur lokalen Richtung der Papillarleisten festgelegt werden,
- die Anzahl an Papillarleisten innerhalb einer vorgegebenen Einheitslänge orthogonal zur lokalen Richtung der Papillarleisten im Fenster anhand der Helligkeitswerte ermittelt wird, und
- die Papillarleisten-Frequenz als das Inverse der Anzahl an Papillarleisten pro vorgegebener Einheitslänge orthogonal zur lokalen Richtung der Papillarleisten ermittelt wird.

Um für jeden Finger einzeln eine exakte Ermittlung der optimalen Bildaufnahme innerhalb eines Bildstapels und derart eine vorteilhafte Skalierung zu gewährleisten, kann vorgesehen sein, dass für jeden Finger dasjenige Fingerbild und/oder derjenige Fingerprint eines Bildstapels als optimal erkannt wird,

- deren oder dessen Papillarleisten-Frequenz innerhalb des vorgegebenen Frequenzintervalls liegt, und/oder
- die bzw. der als am relativ schärfsten gereiht ist, und/oder
- deren oder dessen ermittelter NFIQ 2.0-Wert oberhalb des vorgegebenen Schwellenwerts liegt.

Eine einfache Überprüfung der erfindungsgemäß ermittelten Fingerabdrücke in gängigen Datenbanken bzw. mit aus dem Stand der Technik bekannten Programmen kann gewährleistet werden, wenn in Schritt d) die Skalierung auf eine vorgegebene Auflösung, insbesondere auf größer oder gleich 500 DPI, für jedes Fingerbild und/oder jeden Fingerprint einzeln durchgeführt wird.

Da optische Bauelemente jeder Ausprägung einer Fingerabdruck-Erkennungsanordnung meist zumindest einmal kalibriert werden, um anhand des gemessenen Objektabstands auf die dazugehörige Schärfeebene zu schließen, kann vorteilhafterweise vorgesehen sein, dass für die Auswahl des Schärfeebenen-Abstandswerts anhand des gemessenen Objektabstands eine Schärfeebene-Objektabstands-Tabelle herangezogen wird,

- wobei zur Erstellung der Schärfeebene-Objektabstands-Tabelle eine Kalibrierung der Fingerabdruck-Erkennungsanordnung mit einem Kalibriermuster vorgenommen wird,
- wobei für eine Vielzahl bekannter Linsenkonfigurationen der Bildaufnahmeeinheit und der jeweils dazugehörigen Schärfeebenen mit deren jeweiligen Schärfeebenen-Abstandswerten jeweils

- das Kalibriermuster mit unterschiedlichem Abstand zur Bildaufnahmeeinheit durch den Erfassungsbereich der Bildaufnahmeeinheit bewegt wird,
  wobei jeweils Bildaufnahmen des Kalibriermusters erstellt werden und der zugehörige Objektabstand ermittelt wird,
- wobei diejenige Bildaufnahme ermittelt wird, deren Qualität anhand zumindest eines vorgegebenen Qualitätsmaßes als optimal erkannt wird, wobei insbesondere die am relativ schärfsten gereihte Bildaufnahme als optimal erkannt wird, und
- wobei der zur als optimal erkannten Bildaufnahme gehörige Objektabstand als der Schärfeebenen-Abstandswert der jeweiligen Schärfeebene gemeinsam mit der zugehörigen Linsenkonfiguration in der Schärfeebene-Objektabstands-Tabelle hinterlegt wird.

In der Schärfeebene-Objektabstands-Tabelle sind dementsprechend für jeden Objektabstand der zugehörige Schärfeebenen-Abstandswert und die zugehörige Konfiguration zur Justierung der Linsenelemente hinterlegt, sodass ein scharfes Abbild eines Fingers erzeugt werden kann.

Um eine bestmögliche Verarbeitung bzw. Überprüfung der ermittelten Fingerabdrücke mit gängigen Softwarelösungen sicherzustellen, kann vorgesehen sein, dass anschließend an die Skalierung in Schritt d) eine Registrierung der Fingerbilder und/oder der Fingerprints durchgeführt wird, wobei

- für jedes Fingerbild und/oder jeden Fingerprint eine rechteckige Begrenzung, insbesondere eine Bounding Box, vorzugsweise mit zwei zur Längsachse des Fingerbilds bzw. Fingerprints des Fingers parallelen Kanten und zwei zur Längsachse des Fingerbilds bzw. Fingerprints des Fingers normalen Kanten, festgelegt wird und
- eine Drehung, bei der die rechteckige Begrenzung des Bildbereichs am kleinsten ist, ermittelt und auf die jeweilige Begrenzung, insbesondere auf die Bounding Box, angewendet wird.

Da die aus dem Stand der Technik bekannten Softwarelösungen keine schiefen bzw. rotierten Aufnahmen von Fingern bzw. Fingerabdrücke verarbeiten können, kann durch eine derartige Registrierung eine einfache Verarbeitung bei geringem Rechenaufwand sichergestellt werden.

Um ein erfindungsgemäßes Verfahren auf verschiedensten Fingerabdruck-Erkennungsanordnungen durchführen zu können, kann ein Datenträger vorgesehen sein, auf dem ein Computerprogramm zur Durchführung eines erfindungsgemäßen Verfahrens abgespeichert ist, insbesondere wenn es auf einer Fingerabdruck-Erkennungsanordnung mit einer Bildaufnahmeeinheit ausgeführt wird.

Die Erfindung betrifft weiters eine Fingerabdruck-Erkennungsanordnung zur Erfassung von Fingerabdrücken, insbesondere ausgebildet als mobiles tragbares Endgerät, vorzugsweise ausgebildet zur Durchführung eines erfindungsgemäßen Verfahrens und/oder enthaltend einen erfindungsgemäßen Datenträger, umfassend eine Bildaufnahmeeinheit, wobei die Bildaufnahmeeinheit auf eine Vielzahl von Schärfeebenen scharfstellbar ist,

- wobei ein Abstandssensor zur Bestimmung des Objektabstands zwischen der Bildaufnahmeeinheit und einem oder mehreren Fingern im Erfassungsbereich der Bildaufnahmeeinheit vorgesehen ist,
- wobei eine Verarbeitungseinheit vorgesehen ist, die dazu ausgebildet ist,

  - die Bildaufnahmeeinheit auf zumindest eine Schärfeebene mit einem dem ermittelten Objektabstand entsprechenden Schärfeebenen-Abstandswert einzustellen, und bei dieser Einstellung zur Erstellung zumindest einer Bildaufnahme von einem oder mehreren Fingern, die sich im Erfassungsbereich der Bildaufnahmeeinheit befinden, zu veranlassen, und
  - aufgrund des Schärfeebenen-Abstandswerts der ermittelten Schärfeebene eine Skalierung zumindest eines Teils der Bildaufnahme vorzunehmen, und dabei die Skalierung auf eine vorgegebene Auflösung, insbesondere auf eine vorgegebene Punktdichte, vorzugsweise angegeben in DPI, die direkt proportional zum ermittelten Schärfeebenen-Abstandswert ist, durchzuführen.

Eine derartig ausgebildete Fingerabdruck-Erkennungsanordnung erfasst vorteilhafterweise kontaktlos die Fingerabdrücke eines Benutzers, sodass dieser den Sensor bzw. die Bildaufnahmeeinheit für die Aufnahme der Fingerabdrücke nicht berühren braucht. Dadurch wird vorteilhafterweise z.B. die Erfassungsgenauigkeit erhöht, da keine Verunreinigungen oder latente Fingerabdrücke auf der Bildaufnahmeeinheit zurückbleiben.

Durch die an den Objektabstand angepasste Auswahl der Schärfeebene werden die Fingerabdrücke des Benutzers stets scharf aufgenommen, sodass sie problemlos zum Vergleich mit bereits bestehenden Datenbanken mit z.

B. kontaktbasiert erstellten Fingerabdrücken herangezogen werden können.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen:

Fig. 1 eine Fingerabdruck-Erkennungsanordnung zur Durchführung eines erfindungsgemäßen Verfahrens,
Fig. 2a schematisch die Erstellung einer Abfolge von Bildaufnahmen mit verschiedenen Schärfeebenen-Abstandswerten,
Fig. 2b eine Bildaufnahme mit Abbildern von vier Fingern eines Benutzers,
Fig. 2c ein aus der Bildaufnahme in Fig. 2b erstelltes reduziertes Bild,
Fig. 2d ein Beispiel eines Fingerbilds,
Fig. 2e ein Beispiel eines Fingerprints,
Fig. 3a einen Bildbereich mit dem Fingerabdruck eines Benutzers,
Fig. 3b und Fig. 3c schematisch die Ermittlung der Papillarleisten-Frequenz und
Fig. 4 schematisch den Strahlengang einer optischen Linse.

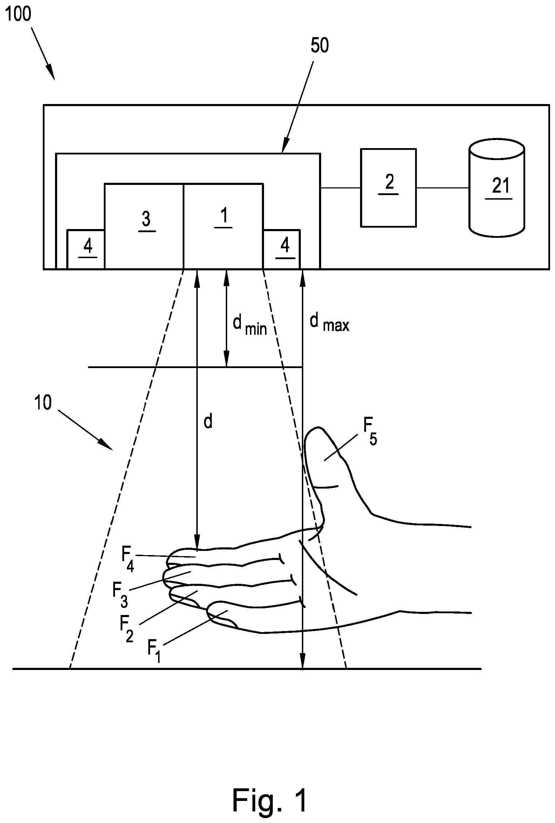

**Fig. 1** zeigt eine erfindungsgemäße Fingerabdruck-Erkennungsanordnung 100 zur Durchführung eines erfindungsgemäßen Verfahrens zur Erfassung von Fingerabdrücken. Die Fingerabdruck-Erkennungsanordnung 100 umfasst im gezeigten Ausführungsbeispiel eine Aufnahmeanordnung 50, sowie eine Verarbeitungseinheit 2, in der Daten 21 hinterlegt sind. Die Aufnahmeanordnung 50 umfasst im gezeigten Ausführungsbeispiel eine Bildaufnahmeeinheit 1, einen Abstandssensor 3 sowie Beleuchtungsmittel 4.

Bei der Bildaufnahmeeinheit 1 handelt es sich beispielsweise um eine Kamera, deren Linse fokussierbar ist. Eine Realisierungsform einer derartigen Linse wird als liquid lense bezeichnet und basiert auf dem Prinzip der Elektrobenetzung, wonach sich die Grenzfläche zwischen zwei Flüssigkeiten verändert, wenn eine Spannung angelegt wird.

Beim Abstandssensor 3 der Aufnahmeanordnung 50 kann es sich beispielsweise um einen time of flight Sensor handeln. Ein derartiger time of flight Sensor ermittelt die Distanz zu einem Objekt mit Hilfe des Laufzeitverfahrens. Dazu wird beispielsweise ein Lichtpuls ausgesendet und die Laufzeit festgestellt, die das Licht bis zum Objekt und wieder zurück zum Sensor benötigt. Diese benötigte Laufzeit ist direkt proportional zur Distanz des Objekts.

Vorteil dieses kompakten Hardware-Aufbaus ist, dass dieser auch in einem mobilen Gerät wie beispielsweise in einem Smartphone oder Tablet verbaut sein kann und somit keine voluminösen dreidimensionalen Erfassungssensoren erforderlich sind. Somit kann eine derartige Fingerabdruck-Erkennungsanordnung 100 auch mobil und tragbar ausgeführt sein.

Die Bildaufnahmeeinheit 1 und der Abstandssensor 3 sind zueinander kalibriert und die Beleuchtungsmittel 4, beispielsweise Leuchtdioden, sind um die Bildaufnahmeeinheit 1 angeordnet, um eine ausreichende Beleuchtung des Erfassungsbereichs 10 der Bildaufnahmeeinheit 1 zu gewährleisten. Der Erfassungsbereich 10 der Bildaufnahmeeinheit 1 ist durch die Abstände $d_{min}$ und $d_{max}$ begrenzt, wobei der Abstand $d_{max}$ so gewählt ist, dass die geforderte Auflösung der Fingerabdrücke von z. B. mindestens 500 DPI gewährleistet ist und der Abstand $d_{min}$ so gewählt ist, dass im Bild B noch gleichzeitig vier Finger einer Hand sichtbar sind.

Im gezeigten Ausführungsbeispiel startet die Fingerabdruck-Erkennungsanordnung 100 die Erfassung von Fingerabdrücken automatisch, sobald sich ein oder mehrere Finger $F_i$; $F_1$, ..., $F_5$ eines Benutzers im Erfassungsbereich 10 der Bildaufnahmeeinheit 1 befinden. Im Folgenden bezeichnet i einen Index $i \in \{1,2,...10\}$, der den jeweils aufgenommenen bzw. betrachteten Finger ($F_i$) des Benutzers kennzeichnet.

Wie in **Fig.** 1 ersichtlich ist, werden im gezeigten Ausführungsbeispiel vier Finger $F_1$, ..., $F_4$ des Benutzers, nämlich der Zeigefinger, der Mittelfinger, der Ringfinger und der kleine Finger, gleichzeitig aufgenommen. Der Daumen $F_5$ des Benutzers befindet sich außerhalb des Erfassungsbereichs 10 der Bildaufnahmeeinheit 1. Zur Aufnahme der Finger $F_i$ ist es nicht erforderlich, dass der Benutzer seine Hand in einer vorgegebenen Position oder Ausrichtung in den Bildaufnahmebereich 10 der Fingerabdruck-Erkennungsanordnung 100 bewegt, sondern er kann sie in einer für ihn angenehmen natürlichen Position und Ausrichtung in den Bildaufnahmebereich 10 bewegen.

Um eine Aufnahme eines einzelnen Fingers $F_i$; $F_1$, ..., $F_5$ zu erstellen, braucht der Benutzer diesen nur in den Erfassungsbereich 10 der Bildaufnahmeeinheit 1 bewegen und so rotieren, dass die Papillarlinien für die Bildaufnahmeeinheit 1 erfassbar sind.

Um die Sichtbarkeit der Papillarleisten und der Abstände dazwischen, die auch als Ridges and Valleys bezeichnet werden, zu erhöhen, werden die Finger $F_i$, $i \in \{1,2,...10\}$ des Benutzers im gezeigten Ausführungsbeispiel mit unterschiedlichen Lichtspektren gleichmäßig beleuchtet. Zur Beleuchtung dienen dabei ringförmig um die Bildaufnahmeeinheit 1 angeordnete Leuchtmittel 4, z. B. Leuchtdioden. Durch die hohe Intensität des Lichts wird die Beschaffenheit der Umgebungsbeleuchtung vorteilhafterweise unerheblich und der Hintergrund in einer erstellten Bildaufnahme B sehr dunkel aufgenommen. Weiters benötigt die Aufnahme einer derartigen Bildaufnahme B nur eine geringe Belichtungszeit, sodass Unschärfeeffekte durch beispielsweise Bewegung der Finger $F_i$, $i \in \{1,2,...10\}$ und/oder der Fingerabdruck-Erkennungsanordnung 100 verringert bzw. vollständig vermieden werden.

Gemäß Verfahrensschritt a) wird zunächst eine Abstandsmessung zwischen der Bildaufnahmeeinheit 1 und den Fingern $F_i$, die sich im Bildaufnahmebereich 10 der Bildaufnahmeeinheit 1 befinden, durchgeführt und ein diesbezüglicher Objektabstandswert d für den jeweils betreffenden Finger $F_i$ ermittelt.

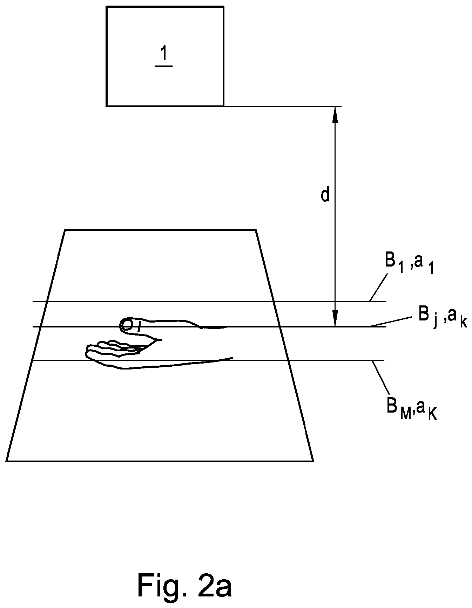

Anschließend wird in Verfahrensschritt b) zumindest eine Schärfeebene mit einem Schärfeebenen-Abstand $a_k$ ermittelt, deren Schärfetiefe den ermittelten Objektabstand d möglichst eng umschließt bzw. diesem möglichst entspricht (siehe **Fig. 2a**):
Die Schärfeebenen-Abstandswerte $a_k$, $k \in \{1,...,K\}$ können dabei innerhalb eines vorgegebenen Abstandswerteintervalls um den im Verfahrensschritt b) ermittelten Objektabstandswert d liegen und in vorgegebenen Abstandswertschritten voneinander beabstandet sein. Im Folgenden bezeichnet k einen Index $k \in \{1,...,K\}$, der die jeweilige Schärfeebene angibt. Mit jeder erstellten Bildaufnahme $B_j$, $j \in \{1,...,M\}$ wird der jeweils zugehörige Schärfeebenen-Abstandswert $a_k$ hinterlegt (siehe **Fig. 2a**). Im Folgenden bezeichnet j einen Index $j \in \{1,...,M\}$, der die jeweils betrachtete Bildaufnahme ($B_j$) kennzeichnet.

Da der gemessene Objektabstand d nur den ungefähren Abstand zwischen der Bildaufnahmeeinheit 1 und den Fingern $F_i$ des Benutzers angibt, wird der Schärfeebenen-Abstandswert $a_k$ in einem Intervall von einer vorgegebenen Anzahl an z. B. Millimetern um den gemessenen Objektabstandswert d variiert. Die Breite des Abstandswerteintervalls sowie die Beabstandung der Abstandswerteschritte zueinander können dabei je nach Bedarf variiert werden. Auf diese Weise wird, wie in **Fig. 2a** gezeigt, eine Anzahl von M Bildaufnahmen $B_j$ erstellt und mit den zugehörigen Schärfeebenen-Abstandswerten $a_k$ $k \in \{1,...,K\}$ hinterlegt.

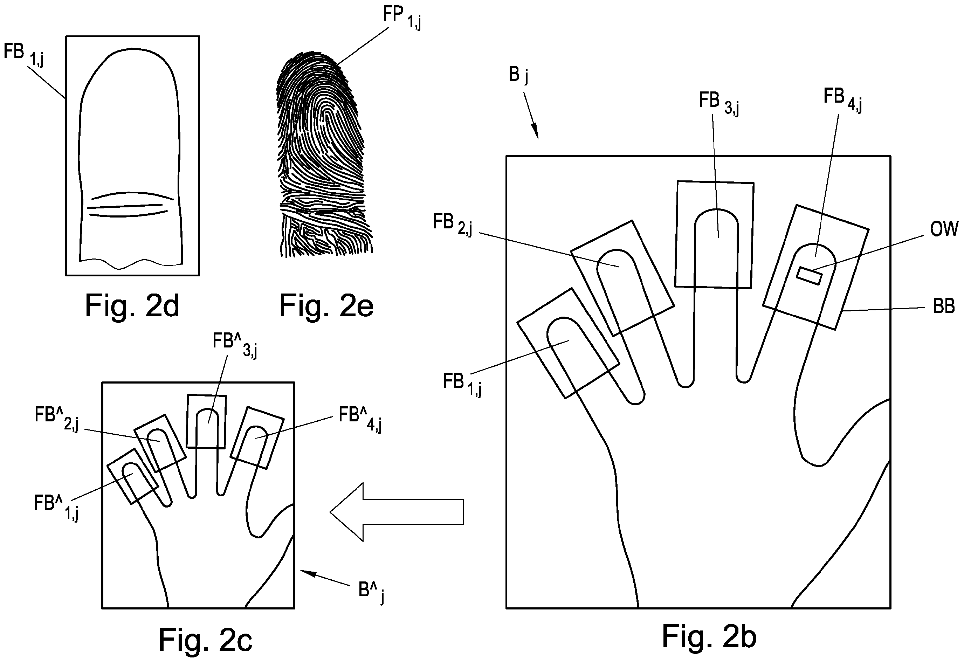

Im gezeigten Ausführungsbeispiel wird vor der Skalierung eine Reduktion der Auflösung der Bildaufnahme $B_j$ durchgeführt und ein reduziertes Bild $B^{\wedge}_j$ berechnet. Eine Segmentierung und Konturverfolgung wird auf dem reduzierten Bild $B^{\wedge}_j$ durchgeführt und die Position und/oder die Lage der Fingerbilder $FB^{\wedge}_{i,j}$ der Finger $F_i$ des Benutzers im reduzierten Bild $B^{\wedge}_j$ wird derart ermittelt, wie dies in **Fig. 2c** dargestellt ist. Die Positionen der zugehörigen aufgenommenen Fingerbilder $FB_{i,j}$ in der erstellten Bildaufnahme $B_j$, die den im reduzierten Bild $B^{\wedge}_j$ ermittelten Fingerbildern $FB^{\wedge}_{i,j}$ jeweils entsprechen, werden anschließend durch Extrapolation der Positionen der Fingerbilder $FB^{\wedge}_{i,j}$ im reduzierten Bild $B^{\wedge}_j$ berechnet. **Fig. 2d** zeigt ein Beispiel eines aufgenommenen Fingerbilds $FB_{i,j}$, das Informationen über Hintergrund- und Hautfarbe enthält.

Die Segmentierung basiert beispielsweise auf der Detektion der Hautfarbe nach C. Stein, C. Nickel, and C. Busch. Fingerphoto recognition with smartphone cameras. In Proc. Conf. Biometrics Special Interest Group (BIOSIG), pages 1-12, Darmstadt, Germany, Sept 2012, und wird durch die oben beschriebene, starke Beleuchtung vereinfacht. Bei der Segmentierung eines reduzierten Bilds $B^{\wedge}_j$ werden im gezeigten Ausführungsbeispiel verschiedene Filtermasken kombiniert und die jeweils im reduzierten Bild $B^{\wedge}_j$ erkennbaren Fingerbilder $FB^{\wedge}_{i,j}$ von Fingern $F_i$ bzw. Fingerabdrücke von der Hintergrundinformation separiert.

Einzelne Finger $F_i$ bzw. die Lage und Position deren Fingerbilder $FB^{\wedge}_{i,j}$ werden beispielsweise mittels Konturverfolgung erkannt und ein rechteckig orientiertes Fenster bzw. Begrenzung BB wird um den jeweiligen Finger $F_i$ definiert. Abschließend können aufgrund der Positionen der ermittelten Fingerbilder $FB^{\wedge}_{i,j}$ auch die aufgenommenen Fingerbilder $FB_{i,j}$ einzelner Finger $F_i$ individuell aus den einzelnen erstellten Bildaufnahmen $B_j$ bestimmt werden.

Auf diese Weise ist sichergestellt, dass die weitere Verarbeitung der Bildaufnahme B; bzw. die Skalierung der Fingerbilder $FB_{i,j}$ nur dann durchgeführt wird, wenn in der Bildaufnahme $B_j$ auch tatsächlich die Abbilder $FB_{i,j}$ von Fingern $F_i$ des Benutzers erkennbar sind bzw. dass nur diejenigen Bildbereiche $FB_{i,j}$ einer Bildaufnahme $B_j$ skaliert werden brauchen, in denen das Fingerbild $FB_{i,j}$ eines Fingers F oder die Fingerbilder $FB_{i,j}$ mehrerer Finger $F_i$, z. B. $i \in \{1,...,4\}$, ermittelt wurden. Dies stellt eine rasche Verarbeitung der Bildaufnahme $B_j$ bzw. der Fingerbilder $FB_{i,j}$ sicher. Alternativ dazu kann beispielsweise für jeden Finger $F_i$ einzeln eine Skalierung der Fingerbilder $FB_{i,j}$ entsprechend dem für den Finger $F_i$, ermittelten Abstandswert $a_k$, $k \in \{1,...,K\}$ durchgeführt werden.

Im gezeigten Ausführungsbeispiel werden derart, wie in **Fig. 2b und Fig. 2c** dargestellt, die Fingerbilder $FB_{i,j}$ von vier Fingern $F_1,..., F_4$ des Benutzers ermittelt. Der Daumen des Benutzers wurde nicht vollständig erfasst und daher nicht als Abbild eines Fingers detektiert. Diejenigen Teile bzw. Bildbereiche der Bildaufnahme $B_j$, in denen kein Fingerbild eines Fingers ermittelt wurde, werden verworfen, sodass die Verarbeitung der Bildaufnahme $B_j$ rascher und mit weniger Rechenaufwand erfolgen kann, während gleichzeig Speicherplatz gespart wird.

Aus jeder Bildaufnahme $B_j$ werden für eine Anzahl von Fingern $F_i$ $i \in \{1,...,10\}$ Fingerbilder $FB_{i,j}$ mittels der oben beschriebenen Segmentierung extrahiert. In **Fig. 1** und **Fig. 2b** ist ein Beispiel mit vier Fingern $F_i$ $i \in \{1,...,4\}$ dargestellt - vier Fingerbilder $FB_{1,j},..., FB_{4,j}$ von Fingern $F_1,..., F_4$, nämlich des Zeigefingers, des Mittelfingers, des Ringfingers und des kleinen Fingers, mittels der oben beschriebenen Segmentierung extrahiert.

Im gezeigten Ausführungsbeispiel werden die Fingerabdrücke bzw. Fingerprints $FP_{i,j}$ in einem weiteren Verarbeitungsschritt aus den einzelnen Fingerbildern $FB_{i,j}$ der Finger $F_i$ extrahiert, was beispielsweise in Liu, Xinwei, et al.

"An improved 3-step contactless fingerprint image enhancement approach for minutiae detection." Visual Information Processing (EUVIP), 2016 6th European Workshop on Visual Information Processing, IEEE, 2016, gezeigt ist. Ein Beispiel für einen derartigen Fingerabdruck bzw. Fingerprint $FP_{i,j}$ ist in **Fig. 2e** dargestellt. Anschließend wird der Kontrast der Ridges bzw. der Papillarleisten verstärkt, um die Qualität der extrahierten Fingerabdrücke zu verbessern, wobei die Verstärkung des Kontrasts mittels Mean-Variance, Normalisierung, Normalized Box Filtern und/oder morphologischen Operationen verstärkt wird.

Wie bereits zuvor erwähnt, kann der Abstandswert $a_k$ für die Auswahl einer Skalierung der Bildaufnahme $B_j$ auf eine vorgegebene Auflösung herangezogen werden, wobei die Skalierung in diesem Fall beispielsweise direkt proportional zum Abstandswert $a_k$ durchgeführt wird.

Um jeweils das optimale Fingerbild $FB_{i,j}$ für jeden der aufgenommenen Finger $F_i$ zu ermitteln, wird zunächst ein Bildstapel aus den erstellten Bildaufnahmen $B_j$ $j \in \{1,...,M\}$ erstellt und im Bildstapel alle Fingerbilder $FB_{i,j}$ ermittelt und diejenigen Fingerbilder $FB_{i,j*}$ ($j*$ verweist auf die optimale Bildaufnahme $B_j$ für den Finger $F_i$) für jeden aufgenommenen Finger $F_i$ einzeln ermittelt, deren Qualität anhand zumindest eines vorgegebenen Qualitätsmaßes als optimal erkannt wird.

Im gezeigten Ausführungsbeispiel liegen M Bildaufnahmen $B_j$ $j \in \{1,..M\}$ vor. Die Fingerbilder $FB_{i,j}$ der einzelnen Finger $F_i$ werden extrahiert und deren Qualität wird quasi in Echtzeit bewertet. Dazu wird als Qualitätsmaß für die Ermittlung der optimalen Fingerbilder $FB_{i,j*}$ zunächst die Bildschärfe herangezogen und für jeden einzelnen Finger $F_i$ einzeln bewertet.

Dazu wird im gezeigten Ausführungsbeispiel eine relative Reihung aller Fingerbilder $FB_{i,j}$ eines Bildstapels für jeden Finger $F_i$ einzeln anhand deren Bildschärfe vorgenommen. Die Berechnung der Bildschärfe kann dabei beispielsweise wie in Eskicioglu, Ahmet M., and Paul S. Fisher. "Image quality measures and their performance." IEEE Transactions on communications 43.12 (1995): 2959-2965 beschrieben, erfolgen und wird dabei nicht als ein absolutes Maß betrachtet, sondern dient für die Erstellung einer Reihung der Fingerbilder $FB_{i,j}$. Alternativ dazu ist es auch möglich, nur ausgewählte Fingerbilder $FB_{i,j}$ eines Bildstapels für die relative Reihung heranzuziehen.

Im gezeigten Ausführungsbeispiel wird zusätzlich zur Bildschärfe auch die Papillarleisten- bzw. Ridge-Frequenz f als Qualitätsmaß herangezogen, wobei die Papillarleisten-Frequenz f lokal im Zentrum jedes Fingerprints $FP_{i,j}$ ermittelt wird. Alternativ dazu ist es möglich, die Papillarleisten-Frequenz f für ausgewählte Fingerprints $FP_{i,j}$ oder Fingerbilder $FB_{i,j}$ zu ermitteln.

Anschließend wird überprüft, ob die für die jeweiligen Fingerprints $FP_{i,j}$ ermittelte Papillarleisten-Frequenz f innerhalb eines vorgegebenen Frequenzintervalls liegt und der Fingerprint $FP_{i,j}$ wird verworfen, wenn die ermittelte Papillarleisten-Frequenz f außerhalb dieses Frequenzintervalls liegt.

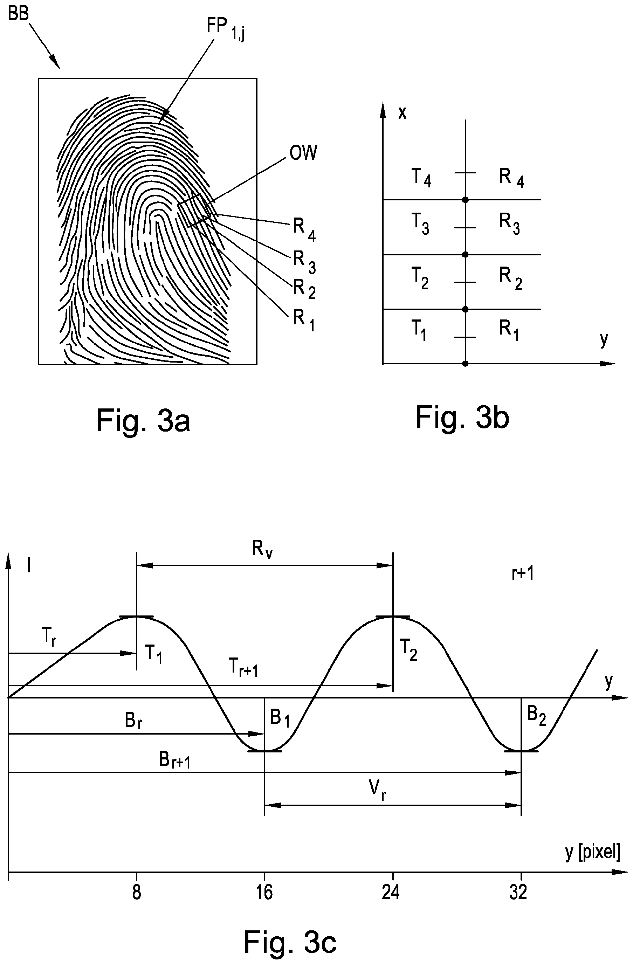

**Fig. 3a** veranschaulicht die Berechnung der Papillarleisten-Frequenz f. Wie oben beschrieben, wird die Papillarleisten-Frequenz f lokal in zumindest einem rechteckigen Fensters OW eines Fingerprints $FP_{i,j}$ ermittelt. Ein derartiges Fenster OW kann alternativ auch eine quadratische Fläche aufweisen. **Fig. 3a** zeigt ein derartiges Fenster OW in dem der Fingerprint $FP_{i,j}$ eines detektierten Fingers $F_i$ mit vier Papillarleisten $R_1$, $R_2$, $R_3$, $R_4$ erkennbar ist.

Im gezeigten Ausführungsbeispiel werden zunächst im Fenster OW die Abbilder der Papillarleisten $R_1$, $R_2$, $R_3$, $R_4$ anhand der mit den einzelnen Pixeln der Bildaufnahmeeinheit 1 erfassten Helligkeitswerte ermittelt. Das Zentrum des Fensters OW wird als Ursprung eines zweidimensionalen Koordinatensystems in der Ebene des Fingerprints $FP_{i,j}$ bzw. des Bildbereichs festgelegt. Eine Koordinatenachse des Koordinatensystems verläuft orthogonal zur lokalen Richtung der Papillarleisten $R_1$, $R_2$, $R_3$, $R_4$ und die andere Koordinatenachse verläuft parallel zur lokalen Richtung der Papillarleisten $R_1$, $R_2$, $R_3$, $R_4$, wie dies in **Fig. 3b** dargestellt ist.

Die lokale Papillarleisten- bzw. Ridge-Frequenz f(x, y) wird in Punkt (x, y) als das Inverse der Anteil der Papillarleisten bzw. Ridges per Einheitslänge entlang eines Segments zentriert im Punkt (x, y) und orthogonal zur lokalen Richtung der Papillarleisten $R_1$, $R_2$, $R_3$, $R_4$ bzw. Ridges festgelegt.

Die lokale Ridge Richtung an der Position (x,y) wird durch den Winkel $\Theta(x,y)$ beschrieben. Der Winkel $\Theta(x,y)$ an der Position (x,y) im Fenster OW ist definiert als Winkel zwischen Ridgetangente und horizontaler Achse und ist im Bereich [0 ... PI[ bestimmt. Der Gradient im Punkt (x,y) ist ein zweidimensionaler Vektor mit den Komponenten $\partial_x$ und $\partial_y$. Zur Berechnung von $\Theta(x,y)$ wird in einem N×M Pixel großen Fenster OW folgende Berechnung durchgeführt:

$$\theta(x, y) = \frac{\pi}{2} + \frac{1}{2} \operatorname{atan2}(2\partial_{xy}, \partial_{xx} - \partial_{yy})$$

Dabei sind:

$$\partial_{xy}(x,y) = \sum_{u=x-\frac{N}{2}}^{x+\frac{N}{2}} \sum_{v=y-\frac{M}{2}}^{y+\frac{M}{2}} \partial_x(u,v)\partial_y(u,v)$$

$$\partial_{xx}(x,y) = \sum_{u=x-\frac{N}{2}}^{x+\frac{N}{2}} \sum_{v=y-\frac{M}{2}}^{y+\frac{M}{2}} \partial_x^2(u,v)$$

$$\partial_{yy}(x,y) = \sum_{u=x-\frac{N}{2}}^{x+\frac{N}{2}} \sum_{v=y-\frac{M}{2}}^{y+\frac{M}{2}} \partial_y^2(u,v)$$

$\partial_x$ ist der Gradient in x-Richtung und $\partial_y$ ist der Gradient in y-Richtung.

Die lokale Ridge Frequenz f(x,y) im Punkt (x,y) ist das Inverse der Anzahl der Ridges per Einheitslänge entlang einem Segment zentriert in (x,y) und orthogonal zur lokalen Ridge Richtung. Zur Berechnung wird zunächst ein N×M Pixel großes Fenster OW zentriert im Punkt (x,y) um $\Theta$(x,y) rotiert, so dass die y-Achse parallel zur Ridge-Richtung liegt. Die x-Signatur der Grauwerte wird durch Aufsummieren der Werte in jeder Spalte x des Fensters erstellt. Dabei treten lokale Minima $B_r$ mit r = 1,...,k und lokale Maxima $T_v$ mit v = 1,...,l auf.

Die Ridges $R_r$ und Valleys $V_r$ werden folgendermaßen berechnet (siehe **Fig. 3c):**

$$R_v = T_v - T_{v+1}, \qquad v = 1,...,l-1$$

$$V_r = B_r - B_{r+1}, \qquad r = 1,...,k-1$$

Dabei gibt R: Ridge, V: Valley; T: Lokales Maximum der Grauwerte; B: Lokales Minimum der Grauwerte.

Die Papillarleisten- bzw. Ridge-Frequenz f im Punkt (x,y) wird schließlich folgendermaßen berechnet:

$$f(x,y) = \frac{l+k-2}{\sum_{v=1}^{l-1} R_v + \sum_{r=1}^{k-1} V_r}$$

Da die durchschnittliche Länge eines Ridge-Valley-Paars beispielsweise bei einer Auflösung von 500 PPI 8 bis 12 Pixel beträgt, werden diese durchschnittlichen Längen als Schwellenwerte benutzt, um Fingerprints $FP_{i,j}$ zu eliminieren, deren durchschnittliche Ridge-Frequenz f signifikant von der durchschnittlichen Länge eines Ridge-Valley-Paars abweicht.

Im Ausführungsbeispiel wird als weiteres Qualitätsmaß zur Ermittlung der optimalen Fingerprints $FP_{i,j}$ für jeden Finger $F_i$ der NFIQ 2.0-Wert herangezogen. Bei NFIQ 2.0 handelt es sich um eine Open Source Software zur Bewertung der Qualität von Fingerabdruckbildern (siehe *NFIQ 2.0 - NIST fingerprint image quality", National Institute of Standards and Technology, 2016).* Dabei wird im Ausführungsbeispiel für alle Fingerprints $FP_{i,j}$ ein NFIQ 2.0-Wert zwischen 0 und 100 unter Heranziehung des im zweiten Verfahrensschritt zugeordneten Abstandswert $a_i$ ermittelt. Ein Fingerprint $FP_{i,j}$ wird verworfen, wenn der ermittelte NFIQ 2.0-Wert unterhalb eines vorgegebenen Schwellenwerts liegt. Alternativ ist es auch möglich, eine den NFIQ 2.0-Wert nur für ausgewählte Fingerprints $FP_{i,j}$ zu ermitteln.

Im gezeigten Ausführungsbeispiel wird derjenige Fingerprint $FP_{i,j}$ als optimal erkannt, dessen Papillarleisten-Frequenz f innerhalb des vorgegebenen Frequenzintervalls liegt und das als am relativ schärfsten gereiht ist und deren ermittelter NFIQ 2.0-Wert oberhalb des vorgegebenen Schwellenwerts liegt. Diese Vorgehensweise wird für jeden einzelnen Finger $F_i$ durchgeführt, der von der Bildaufnahmeeinheit 1 aufgenommen wurde, sodass schließlich für jeden

der aufgenommenen Finger $F_i$ ein optimaler Fingerprint $FP_{i,j*}$ vorliegt.

Für die Auswahl der passenden Konfiguration zur Justierung der Linsenelemente und damit der Schärfenebene mit dem Schärfenebenen-Abstandswert $a_k$ zu einem gemessenen Objektabstand $d_i$ im Verfahrensschritt b) kann eine einmalige Kalibrierung für jede Realisierungsform der Aufnahmeanordnung 50 durchgeführt werden.

Im Rahmen der Kalibrierung werden die Linsenelemente unterschiedlich konfiguriert, d.h. eine Justierung der Linsenelemente z. B. durch Änderung der Form und/oder Position wird vorgenommen. Der zugehörige Schärfeebenen-Abstandswert $a_k$ wird ermittelt, indem die Bildaufnahmeeinheit 1 dem Kalibriermuster angenähert und wiederholte Aufnahmen des Kalibriermusters mit den dazugehörigen Objektabständen $d_i$ abgespeichert werden. Dabei wird die Schärfeebene durchschritten.

Anschließend wird die optimale Aufnahme mit dem dazugehörigen Abstand $d_{i*}$ bestimmt. Falls der Objektabstand $d_{i*}$ im Erfassungsbereich 10 der Bildaufnahmeeinheit 1 liegt, wird dieser Konfiguration der Linsenelemente eine Schärfeebene mit dem Schärfeebenen-Abstandswert $a_k = d_{i*}$ zugeordnet und in der Schärfeebene-Objektabstands-Tabelle abgespeichert. Auf diese Weise wird eine Schärfeebene-Objektabstands-Tabelle ermittelt.

Bei der Kalibrierung und auch im späteren Betrieb wird eine große Blende gewählt, um eine geringe Tiefenschärfe, d.h. eine geringe Ausdehnung des scharf abgebildeten Bereichs im Objektraum des abbildenden optischen Systems der Bildaufnahmeeinheit 1, zu gewährleisten. Auf diese Weise kann die Schärfentiefe s bzw. die entsprechende Schärfeebene mit dem Schärfeebenen-Abstandswert $a_k$ genau einem Abstandswert $d_i$ zwischen aufgenommenem Objekt bzw. Finger F und Bildaufnahmeeinheit 1 zugeordnet werden.

Um für jedes Fingerbild $FB_{i,j}$ bzw. Fingerprint $FP_{i,j}$ eines Fingers $F_1,..., F_4$ die erforderliche Skalierung möglichst rasch und einfach feststellen zu können, wird im gezeigten Ausführungsbeispiel für die Skalierung der Fingeraufnahmen $FB_{i,j}$ bzw,. Fingerprints $FP_{i,j}$ im Verfahrensschritt d) die Schärfeebene-Objektabstands-Tabelle herangezogen. Erfindungsgemäß wird auch noch eine Skaliertabelle herangezogen, worauf im Folgenden noch näher eingegangen wird.

Für die Umrechnung von Bildpixeln in metrische Größen gibt es zwei Möglichkeiten: Einerseits kann, wie in **Fig. 4** schematisch illustriert ist, der auf eine Bildaufnahme B; anzuwendende Skalierungsfaktor nach folgender Formel berechnet werden:

$$G = B\left(\frac{d}{BW'} - 1\right)$$

Dabei sind G die Gegenstandsgröße [mm] und B die Größe des Bildes [mm] gegeben durch die Bildaufnahmeeinheit, d die Objektabstandweite [mm] und BW' die Brennweite [mm].

Die Berechnung der Bildpunkte DPI [Dots per inch] erfolgt gemäß der Beziehung:

$$\mathrm{DPI} = \mathrm{PPI} = \frac{\mathrm{SenRes_{hor}}}{G}25,4$$

Dabei gibt $\mathrm{SenRes_{hor}}$ die horizontale Pixel-Auflösung des Sensors bzw. der Bildaufnahmeeinheit 1 an. DPI wird im Zusammenhang mit der Erfindung gleichbedeutend mit PPI für die Auflösung bzw. Punktdichte verwendet.

Erfindungsgemäß wird alternativ dazu, wenn die technische Spezifikation des Sensors bzw. der Bildaufnahmeeinheit 1 (z. B. bei Bauteilen für den Verbrauchermarkt) nicht zur Verfügung steht, eine zweite einmalige Kalibrierung für die Skalierung durchgeführt. Dazu wird ein Kalibriermuster mit bekannten Abmessungen genutzt und der gleiche Kalibierprozess wie bereits zuvor beschrieben durchlaufen. Die Berechnung der Bildauflösung beispielsweise in DPI erfolgt über die bekannten metrischen Größen des Kalibriermusters. Diese Art der Kalibrierung ermöglicht somit die Umrechnung von Bildpixeln in metrische Größen. Die ermittelten Werte werden in einer Skaliertabelle abgelegt.

Im gezeigten Ausführungsbeispiel wird die Skalierung auf eine vorgegebene Auflösung bzw. Punktdichte von größer oder gleich 500 DPI, für die Fingerbilder $FB_{i,j}$ bzw. Fingerprints $FP_{i,j}$ einzeln durchgeführt, um eine besonders scharfe und präzise Wiedergabe der Fingerabdrücke bzw. Fingerprints $FP_{i,j}$ der einzelnen Finger $F_i$ des Benutzers sicherzustellen.

Da die meisten Fingerabdruck-Erkennungsalgorithmen standardmäßig eine Auflösung von zumindest 500 DPI erfordern, damit sie kompatibel zur FBI Spezifikation, angegeben in *Criminal Justice Information Services: Electronic Fingerprint Transmission Specification, May 2, 2005, Federal Bureau of Investigation, Criminal Justice Information Services Division, 1000 Custer Hollow Road, Clarksburg, WV 26306,* sind, ist eine Skalierung der aufgenommenen Fingerabdrücke $FP_{i,j}$ auf diese Auflösung erforderlich.

Bei einem erfindungsgemäßen Verfahren kann optional anschließend an die Skalierung im Verfahrensschritt c) eine Registrierung derjenigen Fingerbilder $FB_{i,j}$ bzw. Fingerprints $FP_{i,j}$ eines Fingers $F_i$ durchgeführt werden. Dazu

wird für jeden Bildbereich eine rechteckige Begrenzung BB festgelegt, die beispielsweise mit zwei zur Längsachse des Fingerbilds $FB_{i,j}$, bzw. Fingerprints $FP_{i,j}$ des Fingers jeweiligen $F_i$ parallelen Kanten und zwei zur Längsachse des Fingerbilds $FB_{i,j}$ bzw. Fingerprints $FP_{i,j}$ des Fingers $F_i$ normalen Kanten festgelegt und eine Drehung ermittelt, bei der die rechteckige Begrenzung BB des Bildbereichs am kleinsten ist, die schließlich auf den jeweiligen Bildbereich angewendet wird, wie dies in **Fig. 2b** schematisch dargestellt ist.

Im gezeigten Ausführungsbeispiel wird die Skalierung auf eine vorgegebene Auflösung bzw. Punktdichte von größer oder gleich 500 DPI, für die Fingerbilder $FB_{i,j}$ bzw. Fingerprints $FP_{i,j}$ einzeln durchgeführt, um eine besonders scharfe und präzise Wiedergabe der Fingerabdrücke bzw. Fingerprints $FP_{i,j}$ der einzelnen Finger $F_i$ des Benutzers sicherzustellen.

Da die meisten Fingerabdruck-Erkennungsalgorithmen standardmäßig eine Auflösung von zumindest 500 DPI erfordern, damit sie kompatibel zur FBI Spezifikation, angegeben in *Criminal Justice Information Services: Electronic Fingerprint Transmission Specification, May 2, 2005, Federal Bureau of Investigation, Criminal Justice Information Services Division, 1000 Custer Hollow Road, Clarksburg, WV 26306,* sind, ist eine Skalierung der aufgenommenen Fingerabdrücke $FP_{i,j}$ auf diese Auflösung erforderlich.

Bei einem erfindungsgemäßen Verfahren kann optional anschließend an die Skalierung im Verfahrensschritt c) eine Registrierung derjenigen Fingerbilder $FB_{i,j}$ bzw. Fingerprints $FP_{i,j}$ eines Fingers $F_i$ durchgeführt werden. Dazu wird für jeden Bildbereich eine rechteckige Begrenzung BB festgelegt, die beispielsweise mit zwei zur Längsachse des Fingerbilds $FB_{i,j}$, bzw. Fingerprints $FP_{i,j}$ des Fingers jeweiligen $F_i$ parallelen Kanten und zwei zur Längsachse des Fingerbilds $FB_{i,j}$ bzw. Fingerprints $FP_{i,j}$ des Fingers $F_i$ normalen Kanten festgelegt und eine Drehung ermittelt, bei der die rechteckige Begrenzung BB des Bildbereichs am kleinsten ist, die schließlich auf den jeweiligen Bildbereich angewendet wird, wie dies in **Fig. 2b** schematisch dargestellt ist.

## Patentansprüche

1. Verfahren zur Erfassung von Fingerabdrücken mit einer eine Bildaufnahmeeinheit (1) umfassenden, insbesondere mobilen tragbaren, Fingerabdruck-Erkennungsanordnung (100), wobei die Bildaufnahmeeinheit (1) auf eine Vielzahl von Schärfeebenen scharfstellbar ist, wobei

   a) der Objektabstand (d) zwischen der Bildaufnahmeeinheit (1) und einem oder mehreren Fingern ($F_i$) im Erfassungsbereich (10) der Bildaufnahmeeinheit (1) mittels eines Abstandssensors (3) gemessen wird,
   b) zumindest eine Schärfeebene mit einem dem ermittelten Objektabstand (d) entsprechenden Schärfeebenen-Abstandswert ($a_k$) ermittelt wird,
   c) zumindest eine Bildaufnahme ($B_j$) von einem oder mehreren Fingern ($F_i$), die sich im Erfassungsbereich (10) der Bildaufnahmeeinheit (1) befinden, mit der Bildaufnahmeeinheit (1) in der zuvor ermittelten Schärfeebene erstellt wird,
   d) aufgrund des Schärfeebenen-Abstandswerts ($a_k$) der ermittelten Schärfeebene eine Skalierung zumindest eines Teils der Bildaufnahme ($B_j$) vorgenommen wird, wobei die Skalierung auf eine vorgegebene Auflösung, insbesondere auf eine vorgegebene Punktdichte, vorzugsweise angegeben in DPI, durchgeführt wird,

   **dadurch gekennzeichnet,**

   - **dass** die Skalierung direkt proportional zum ermittelten Schärfeebenen-Abstandswert ($a_k$) ist,
   - **dass** eine Fingerabdruck-Erkennungsanordnung (100), deren technische Spezifikation, insbesondere die Kameraparameter der Bildaufnahmeeinheit (1), nicht vorab bekannt ist, verwendet wird und für die Skalierung der Fingerbilder ($FB_{i,j}$) und/oder Fingerprints ($FP_{i,j}$) in Schritt d) eine Skaliertabelle herangezogen wird,
   - **dass** zur Erstellung der Skaliertabelle eine Kalibrierung der Fingerabdruck-Erkennungsanordnung (100) mit einem Kalibriermuster mit bekannten Abmessungen durchgeführt wird, und
   - **dass** für eine Vielzahl von Linsenkonfigurationen der Bildaufnahmeeinheit (1) und der jeweils dazugehörigen Schärfeebenen mit deren jeweiligen Schärfeebenen-Abstandswerten ($a_k$) jeweils

     - das Kalibriermuster mit bekannten Abmessungen mit unterschiedlichem Abstand zur Bildaufnahmeeinheit (1) durch den Erfassungsbereich (10) der Bildaufnahmeeinheit (1) bewegt wird,
     - wobei jeweils Bildaufnahmen des Kalibriermusters erstellt werden und der zugehörige Objektabstand ($d_i$) ermittelt wird,
     - wobei diejenige Bildaufnahme ermittelt wird, deren Qualität anhand zumindest eines vorgegebenen Qualitätsmaßes als optimal erkannt wird, wobei insbesondere die am relativ schärfsten gereihte Bildaufnahme als optimal erkannt wird,

- wobei für die als optimal erkannte Bildaufnahme eine Berechnung der Bildauflösung, insbesondere in DPI, auf Grundlage der bekannten Abmessungen des Kalibriermusters vorgenommen wird, und
- wobei die auf diese Weise ermittelte Bildauflösung, insbesondere in DPI, gemeinsam mit dem zur als optimal erkannten Bildaufnahme gehörigen Objektabstand ($d_{i*}$) als Schärfeebenen-Abstandswert ($a_k$) der jeweiligen Schärfeebene in der Skaliertabelle hinterlegt wird.

2.  Verfahren nach Anspruch 1, wobei vor Schritt d)

- zumindest ein reduziertes Bild ($B^\wedge_j$) mittels Reduktion der Auflösung der zumindest einen in Schritt c) erstellten Bildaufnahme ($B_j$) berechnet wird,
- die Position und/oder die Lage eines oder mehrerer Fingerbilder ($FB^\wedge_{i,j}$) eines oder mehrerer Finger ($F_i$) im reduzierten Bild ($B^\wedge_j$) mittels Segmentierung und Anwendung eines Konturverfolgungs-Algorithmus ermittelt werden,
- in der erstellten Bildaufnahme ($B_j$) die Positionen des aufgenommenen Fingerbilds oder mehrerer aufgenommenen Fingerbilder ($FB_{i,j}$), die den im reduzierten Bild ($B^\wedge_j$) ermittelten Fingerbildern ($FB^\wedge_{i,j}$) jeweils entsprechen, mittels Extrapolation ermittelt werden und
- in Schritt d) die so ermittelten Teile der Bildaufnahme ($B_j$), in denen das aufgenommene Fingerbild ($FB_{i,j}$) eines Fingers ($F_i$) ermittelt wurde, skaliert werden,
wobei insbesondere vorgesehen ist, dass diejenigen Teile der Bildaufnahme ($B_j$), in denen kein Fingerbild ($FB_{i,j}$) eines Fingers ($F_i$) ermittelt wurde, verworfen werden.

3.  Verfahren nach Anspruch 1 oder 2, wobei nach Schritt d) eine Konvertierung der aufgenommenen Fingerbilder ($FB_{i,j}$) in ein Fingerprint-Format vorgenommen wird, wobei die so konvertierten Fingerprints ($FP_{i,j}$) die Abbilder der Papillarleisten ($R_1$, ..., $R_4$) der Finger ($F_i$), insbesondere in Form eines digitalen Graufarbenbilds, wiedergeben.

4.  Verfahren nach einem der vorangehenden Ansprüche, wobei zwischen Schritt c) und Schritt d)

- eine Abfolge von Bildaufnahmen ($B_j$) erstellt wird, wobei die Bildaufnahmen ($B_j$) von der Bildaufnahmeeinheit (1) mit verschiedenen Schärfeebenen-Abstandswerten ($a_k$) aufgenommen werden,

  - wobei die Schärfeebenen-Abstandswerte ($a_k$) innerhalb eines vorgegebenen Abstandswerteintervalls um den in Schritt a) ermittelten Objektabstand (d) liegen und in vorgegebenen Abstandswertschritten voneinander beabstandet sind, und
  - wobei mit jeder Bildaufnahme ($B_j$) der jeweils zugehörige Schärfeebenen-Abstandswert ($a_k$) hinterlegt wird,

- ein Bildstapel aus den derart erstellten Bildaufnahmen ($B_j$) erstellt wird,
- die Fingerbilder ($FB_{i,j}$) und/oder Fingerprints ($FP_{i,j}$) aus den erstellten Bildaufnahmen ($B_{i,j}$) ermittelt werden und
- dasjenige Fingerbild ($FB_{i,j}$) und/oder derjenige Fingerprint ($FP_{i,j}$), insbesondere für jeden aufgenommenen Finger ($F_i$) einzeln, ermittelt wird, dessen Qualität anhand zumindest eines vorgegebenen Qualitätsmaßes als optimal erkannt wird,

  - wobei insbesondere vorgesehen ist, dass für die Festlegung der Skalierung in Schritt d) der Schärfeebenen-Abstandswert ($a_k$) des als optimal erkannten Fingerbilds ($FB_{i,j*}$) und/oder Fingerprints ($FP_{i,j*}$) herangezogen wird.

5.  Verfahren nach Anspruch 4, wobei als Qualitätsmaß für die Ermittlung der optimalen Fingerbilder ($FB_{i,j*}$) und/oder Fingerprints ($FP_{i,j*}$) im Bildstapel

- die Bildschärfe herangezogen wird, wobei eine relative Reihung ausgewählter, insbesondere aller, Fingerbilder ($FB_{i,j}$) und/oder Fingerprints ($FP_{i,j}$) eines Bildstapels anhand deren Bildschärfe vorgenommen wird und/oder
- die Papillarleisten-Frequenz (f) herangezogen wird,

  - wobei die Papillarleisten-Frequenz (f) für jedes Fingerbild ($FB_{i,j}$) und/oder jeden Fingerprint ($FP_{i,j}$) ermittelt wird und
  - wobei überprüft wird, ob die für das jeweilige Fingerbild ($FB_{i,j}$) und/oder den jeweiligen Fingerprint ($FP_{i,j}$) ermittelte Papillarleisten-Frequenz (f) innerhalb eines vorgegebenen Frequenzintervalls liegt und
  - wobei das jeweilige Fingerbild ($FB_{i,j}$) und/oder der jeweilige Fingerprint ($FP_{i,j}$) verworfen wird, wenn die ermittelte Papillarleisten-Frequenz (f) außerhalb des Frequenzintervalls liegt und/oder

EP 3 663 981 B1

- der NFIQ 2.0-Wert herangezogen wird,

- wobei für ausgewählte Fingerbilder ($FB_{i,j}$) und/oder Fingerprints ($FP_{i,j}$) ein NFIQ 2.0-Wert zwischen 0 und 100 unter Heranziehung des in Schritt c) ermittelten Schärfeebenen-Abstandswerts ($a_k$) und der in Schritt d) skalierten Fingerbilder ($FB_{i,j}$) und/oder Fingerprints ($FP_{i,j}$) ermittelt wird und
- wobei das Fingerbild ($FB_{i,j}$) und/oder der Fingerprint ($FP_{i,j}$) verworfen wird, wenn der ermittelte NFIQ 2.0-Wert unterhalb eines vorgegebenen Schwellenwerts liegt.

6. Verfahren nach Anspruch 5, wobei die Papillarleisten-Frequenz (f) innerhalb zumindest eines rechteckigen oder quadratischen Fensters (OW) in einem Fingerbild ($FB_{i,j}$) und/oder Fingerprint ($FP_{i,j}$) eines Fingers ($F_i$) ermittelt wird,

- wobei im Fingerbild ($FB_{i,j}$) und/oder Fingerprint ($FP_{i,j}$) die Abbilder von Papillarleisten ($R_1$, ..., $R_4$) anhand der mit den einzelnen Pixeln der Bildaufnahmeeinheit (1) erfassten Helligkeitswerte ermittelt werden,
- wobei das Zentrum des Fensters (OW) als Ursprung eines zweidimensionalen Koordinatensystems in der Ebene des Fingerbilds ($FB_{i,j}$) und/oder Fingerprints ($FP_{i,j}$), eine Koordinatenachse des Koordinatensystems orthogonal zur lokalen Richtung der Papillarleisten ($R_1$, ..., $R_4$) und die andere Koordinatenachse parallel zur lokalen Richtung der Papillarleisten ($R_1$, ..., $R_4$) festgelegt werden,
- die Anzahl an Papillarleisten ($R_1$, ..., $R_4$) innerhalb einer vorgegebenen Einheitslänge orthogonal zur lokalen Richtung der Papillarleisten ($R_1$, ..., $R_4$) im Fenster (OW) anhand der Helligkeitswerte ermittelt wird, und
- die Papillarleisten-Frequenz (f) als das Inverse der Anzahl an Papillarleisten ($R_1$, ..., $R_4$) pro vorgegebener Einheitslänge orthogonal zur lokalen Richtung der Papillarleisten ($R_1$, ..., $R_4$), ermittelt wird.

7. Verfahren nach Anspruch 5 oder 6, wobei für jeden Finger dasjenige Fingerbild ($FB_{i,j}$) und/oder derjenige Fingerprint ($FP_{i,j}$) eines Bildstapels als optimal erkannt wird,

- deren oder dessen Papillarleisten-Frequenz (f) innerhalb des vorgegebenen Frequenzintervalls liegt, und/oder
- die bzw. der als am relativ schärfsten gereiht ist, und/oder
- deren oder dessen ermittelter NFIQ 2.0-Wert oberhalb des vorgegebenen Schwellenwerts liegt.

8. Verfahren nach Anspruch 7, wobei in Schritt d) die Skalierung auf eine vorgegebene Auflösung, insbesondere auf größer oder gleich 500 DPI, für jedes Fingerbild ($FB_{i,j}$) und/oder jeden Fingerprint ($FP_{i,j}$) einzeln durchgeführt wird.

9. Verfahren nach einem der vorangehenden Ansprüche, wobei für die Auswahl des Schärfeebenen-Abstandswerts ($a_k$) anhand des gemessenen Objektabstands ($d_i$) eine Schärfeebene-Objektabstands-Tabelle herangezogen wird,

- wobei zur Erstellung der Schärfeebene-Objektabstands-Tabelle eine Kalibrierung der Fingerabdruck-Erkennungsanordnung (100) mit einem Kalibriermuster vorgenommen wird,
- wobei für eine Vielzahl bekannter Linsenkonfigurationen der Bildaufnahmeeinheit (1) und der jeweils dazugehörigen Schärfeebenen mit deren jeweiligen Schärfeebenen-Abstandswerten ($a_k$) jeweils

- das Kalibriermuster mit unterschiedlichem Abstand zur Bildaufnahmeeinheit (1) durch den Erfassungsbereich (10) der Bildaufnahmeeinheit (1) bewegt wird,
wobei jeweils Bildaufnahmen des Kalibriermusters erstellt werden und der zugehörige Objektabstand ($d_i$) ermittelt wird,
- wobei diejenige Bildaufnahme ermittelt wird, deren Qualität anhand zumindest eines vorgegebenen Qualitätsmaßes als optimal erkannt wird, wobei insbesondere die am relativ schärfsten gereihte Bildaufnahme als optimal erkannt wird, und
- wobei der zur als optimal erkannten Bildaufnahme gehörige Objektabstand ($d_{i*}$) als der Schärfeebenen-Abstandswert ($a_k$) der jeweiligen Schärfeebene gemeinsam mit der zugehörigen Linsenkonfiguration in der Schärfeebene-Objektabstands-Tabelle hinterlegt wird.

10. Verfahren nach einem der vorangehenden Ansprüche, wobei anschließend an die Skalierung in Schritt d) eine Registrierung der Fingerbilder ($FB_{i,j}$) und/oder der Fingerprints ($FP_{i,j}$) durchgeführt wird, wobei

- für jedes Fingerbild ($FB_{i,j}$) und/oder jeden Fingerprint ($FP_{i,j}$) eine rechteckige Begrenzung (BB), insbesondere eine Bounding Box, vorzugsweise mit zwei zur Längsachse des Fingerbilds ($FB_{i,j}$) bzw. Fingerprints ($FP_{i,j}$) des Fingers ($F_i$) parallelen Kanten und zwei zur Längsachse des Fingerbilds ($FB_{i,j}$) bzw. Fingerprints ($FP_{i,j}$) des Fingers ($F_i$) normalen Kanten, festgelegt wird und

- eine Drehung, bei der die rechteckige Begrenzung des Bildbereichs am kleinsten ist, ermittelt und auf die jeweilige Begrenzung (BB), insbesondere auf die Bounding Box, angewendet wird.

11. Computerlesbarer Datenträger umfassend Befehle, die, wenn sie von einem Computer ausgeführt werden, der mit einem Abstandssensor (3) und einer Bildaufnahmeeinheit (1) verbunden ist, den Computer veranlassen, das Verfahren nach einem der Ansprüche 1 bis 10 auszuführen.

12. Fingerabdruck-Erkennungsanordnung (100) zur Erfassung von Fingerabdrücken, insbesondere ausgebildet als mobiles tragbares Endgerät, umfassend eine Bildaufnahmeeinheit (1), wobei die Bildaufnahmeeinheit (1) auf eine Vielzahl von Schärfeebenen scharfstellbar ist, ein Abstandssensor (3), wobei der Abstandsensor zur Bestimmung des Objektabstands (d) zwischen der Bildaufnahmeeinheit (1) und einem oder mehreren Fingern ($F_i$) im Erfassungsbereich (10) der Bildaufnahmeeinheit (1) vorgesehen ist, eine Verarbeitungseinheit (2) ausgebildet zur Durchführung eines Verfahrens nach einem der Ansprüche 1 bis 10 und/oder enthaltend einen Datenträger nach Anspruch 11.

**Claims**

1. Method for detecting finger prints with a fingerprint recognition arrangement (100), in particular a mobile, portable fingerprint recognition arrangement, comprising an image capture unit (1), wherein the image capture unit (1) can be focused on a plurality of focal planes, wherein

a) the object distance (d) between the image capture unit (1) and one or more fingers ($F_i$) in the detection area (10) of the image capture unit (1) is measured by means of a distance sensor (3),
b) at least one focal plane is determined by a focal plane distance value ($a_k$) corresponding to the determined object distance (d),
c) at least one image capture ($B_j$) of one or more fingers ($F_i$), which are located in the detection area (10) of the image capture unit (1), is created by the image capture unit (1) in the previously determined focal plane,
d) scaling at least a portion of the image capture ($B_j$) is performed on the basis of the focal plane distance value ($a_k$) of the determined focal plane, the scaling being carried out to a predetermined resolution, in particular to a predetermined point density, preferably expressed in DPI, **characterised in that**

- the scaling is directly proportional to the determined focal plane distance value ($a_k$),
- **in that** a fingerprint recognition arrangement (100) is used, whose technical specification, in particular the camera parameters of the image capture unit (1), is not known in advance, and a scaling table is used for scaling the finger images ($FB_{i,j}$) and/or fingerprints ($FP_{i,j}$) in step d),
- **in that** to produce the scaling table a calibration of the fingerprint recognition arrangement (100) is carried out using a calibration pattern with known dimensions, and
- **in that** for a plurality of lens configurations of the image capture unit (1) and the respectively associated focal planes with their respective focal planes distance values ($a_k$) in each case

- the calibration pattern having known dimensions is moved through the detection area (10) of the image capture unit (1) at a different distance from the image capture unit (1),
- wherein in each case image captures of the calibration pattern are created and the associated object distance (di) is determined,
- wherein that image capture is determined whose quality is recognised as optimal on the basis of at least one predetermined quality measure, wherein in particular the relatively sharpest image capture is recognised as optimal,
- wherein a calculation of the image resolution, in particular in DPI, based on the known dimensions of the calibration pattern, is carried out for the image capture recognised as optimal, and
- wherein the image resolution determined in this way, in particular in DPI, is stored in the scaling table together with the object distance ($d_{i*}$) belonging to the image capture recognised as optimal as a focal plane distance value ($a_k$) of the respective focal plane.

2. Method according to claim 1, wherein before step d)

- at least one reduced image ($B\hat{}_j$) is calculated by reducing the resolution of the at least one image capture ($B_j$) created in step c),
- the position and/or the location of one or more finger images ($FB\hat{}_{i,j}$) of one or more fingers ($F_i$) in the reduced

image ($B^{\wedge}_j$) are determined by means of segmentation and application of a contour tracking algorithm,
- the positions of the captured finger image or of a plurality of captured finger images ($FB_{i,j}$), which correspond respectively to the finger images ($FB^{\wedge}_{i,j}$) determined in the reduced image ($B^{\wedge}_j$), are determined in the created image capture ($B_j$) by means of extrapolation and
- in step d) the thus determined portions of the image capture ($B_j$), in which the captured finger image ($FB_{i,j}$) of a finger ($F_i$) has been determined, are scaled,
wherein in particular it is provided that those portions of the image capture ($B_j$), in which no finger image ($FB_{i,j}$) of a finger ($F_i$) has been determined, are discarded.

3. Method according to claim 1 or 2, wherein after step d) the captured finger images ($FB_{i,j}$) are converted into a fingerprint format, wherein the thus converted fingerprints ($FP_{i,j}$) reproduce the images of the papillary ridges ($R_1$, ..., $R_4$) of the fingers ($F_i$), in particular in the form of a digital greyscale image.

4. Method according to any one of the preceding claims, wherein between step c) and step d)

- a sequence of image captures ($B_j$) is produced, wherein the image captures ($B_j$) are taken by the image capture unit (1) at different focal plane distance values ($a_k$),

- wherein the focal plane distance values ($a_k$) lie within a predetermined distance value interval around the object distance (d) determined in step a) and are spaced part from one another in predetermined distance value steps, and
- wherein the respectively associated focal plane distance value ($a_k$) is stored with each image capture ($B_j$),

- an image stack is created from the image captures ($B_j$) created in this way,
- the finger images ($FB_{i,j}$) and/or fingerprints ($FP_{i,j}$) are determined from the image captures ($B_{i,j}$) produced and
- that finger image ($FB_{i,j}$) and/or fingerprint ($FP_{i,j}$) is determined, in particular individually for each recorded finger ($F_i$), the quality of which is recognised as optimal on the basis of at least one predetermined quality measure,

- wherein in particular it is provided that for determining the scaling in step d) the focal plane distance value ($a_k$) of the finger image ($FB_{i,j*}$) and/or fingerprint ($FP_{i,j*}$) recognised as optimal is used,

5. Method according to claim 4, wherein as the quality measure for determining the optimal finger images ($FB_{i,j*}$) and/or fingerprints ($FB_{i,j*}$) in the image stack

- the image sharpness is used, wherein a relative ranking of selected, in particular all, finger images ($FB_{i,j}$) and/or fingerprints ($FP_{i,j}$) of an image stack is carried out on the basis of their image sharpness and/or
- the papillary ridge frequency (f) is used,

- wherein the papillary ridge frequency (f) is determined for each finger image ($FB_{i,j}$) and/or each fingerprint ($FP_{i,j}$) and
- wherein it is checked whether the papillary ridge frequency (f) determined for the respective finger image ($FB_{i,j}$) and/or the respective fingerprint ($FP_{i,j}$) lies within a predetermined frequency interval and
- wherein the respective finger image ($FB_{i,j}$) and/or the respective fingerprint ($FP_{i,j}$) is discarded if the determined papillary ridge frequency (f) lies outside the frequency interval and/or

- the NFIQ 2.0 value is used,

- wherein a NFIQ. 2.0 value of between 0 and 100 is determined for selected finger images ($FB_{i,j}$) and/or fingerprints ($FP_{i,j}$) using the focal plane distance value ($a_k$) determined in step c) and the finger images ($FB_{i,j}$) and/or fingerprints ($FP_{i,j}$) scaled in step d), and
- wherein the finger image ($FB_{i,j}$) and/or the fingerprint ($FP_{i,j}$) is discarded, if the determined NFIQ 2.0 value is below a predetermined threshold.

6. Method according to claim 5, wherein the papillary ridge frequency (f) is determined within at least one rectangular or square window (OW) in a finger image ($FB_{i,j}$) and/or fingerprint ($FP_{i,j}$) of a finger ($F_i$),

- wherein in the finger image ($FB_{i,j}$) and/or fingerprint ($FP_{i,j}$) the images of papillary ridges ($R_1$, ..., $R_4$) are determined on the basis of the brightness values detected by the individual pixels of the image capture unit (1),

- wherein the centre of the window (OW) is set as the origin of a two-dimensional coordinate system in the plane of the finger image ($FB_{i,j}$) and/or fingerprint ($FP_{i,j}$), a coordinate axis of the coordinate system is set orthogonal to the local direction of the papillary ridges ($R_1$, ..., $R_4$) and the other coordinate axis is set parallel to the local direction of the papillary ridges ($R_1$,..., $R_4$),
- the number of papillary ridges ($R_1$, ..., $R_4$) within a predetermined unit length orthogonal to the local direction of the papillary ridges ($R_1$, ..., $R_4$) in the window (OW) is determined on the basis of the brightness values, and
- the papillary ridge frequency (f) is determined as the inverse of the number of papillary ridges ($R_1$, ..., $R_4$) per predetermined unit length orthogonal to the local direction of the papillary ridges ($R_1$, ..., $R_4$).

7. Method according to claim 5 or 6, wherein for each finger that finger image ($FB_{i,j}$) and/or that fingerprint ($FP_{i,j}$) of an image stack is recognised as optimal,

- whose papillary ridge frequency (f) lies within the predefined frequency interval, and/or
- which is ranked the sharpest in relative terms, and/or
- whose determined NFtQ. 2.0 value lies above the specified threshold value.

8. Method according to claim 7, wherein in step d) the scaling to a predetermined resolution, in particular to greater than or equal to 500 DPI, is performed individually for each finger image ($FB_{i,j}$) and/or each fingerprint ($FP_{i,j}$).

9. Method according to any one of the preceding claims, wherein for the selection of the focal plane distance value ($a_k$) on the basis of the measured object distance ($d_i$) a focal plane object distance table is used,

- wherein a calibration of the fingerprint recognition arrangement (100) is carried out with a calibration pattern to create the focal plane object distance table,
- wherein for a plurality of known lens configurations of the image capture unit (1) and the respective associated focal planes with their respective focal plane distance values ($a_k$) in each case

  - the calibration pattern is moved through the detection area (10) of the image capture unit (1) at a different distance from the image capture unit (1),
  wherein in each case image captures of the calibration pattern are created and the associated object distance ($d_i$) is determined,
  - wherein that image capture is determined whose quality is recognised as optimal on the basis of at least one predetermined quality measure, wherein in particular the image capture which is arranged in the sharpest relative position is recognised as optimal, and
  - wherein the object distance ($d_{i*}$) associated with the image capture recognised as optimal is stored as the focal plane distance value ($a_k$) of the respective focal plane together with the associated lens configuration in the focal plane object distance table.

10. Method according to any of the preceding claims , wherein subsequent to the scaling in step d) a registration of the finger images ($FB_{i,j}$) and/or the fingerprints ($FP_{i,j}$) is performed, wherein

- a rectangular boundary (BB), in particular a bounding box, preferably with two edges parallel to the longitudinal axis of the finger image ($FB_{i,j}$) or fingerprint ($FP_{i,j}$) of the finger ($F_i$) and two edges normal to the longitudinal axis of the finger image ($FB_{i,j}$) or fingerprint ($FP_{i,j}$) of the finger ($F_i$) is defined for each finger image ($FB_{i,j}$) and/or each fingerprint ($FP_{i,j}$), and
- a rotation at which the rectangular boundary of the image region is smallest is determined and applied to the respective boundary (BB), in particular to the bounding box.

11. Computer-readable data carrier comprising commands, which, when executed by a computer connected to a distance sensor (3) and an image capture unit (1), cause the computer to perform the method according to any one of claims 1 to 10.

12. Fingerprint recognition arrangement (100) for capturing fingerprints, in particular configured as a mobile, portable terminal, comprising an image capture unit (1), wherein the image capture unit (1) can be focused on a plurality of focal planes,

- a distance sensor (3), wherein the distance sensor is provided for determining the object distance (d) between the image capture unit (1) and one or more fingers ($F_i$) in the detection range (10) of the image capture unit (1),

- a processing unit (2) configured for performing a method according to any one of claims 1 to 10 and/or containing a data carrier according to claim 11.

**Revendications**

1. Procédé de détection d'empreintes digitales avec un dispositif de reconnaissance d'empreinte digitale (100) comprenant une unité d'enregistrement d'image (1), en particulier portable mobile, dans lequel la netteté de l'unité d'enregistrement d'image (1) peut être réglée sur une pluralité de plans de netteté, dans lequel

a) la distance de l'objet (d) entre l'unité d'enregistrement d'image (1) et un ou plusieurs doigts ($F_i$) dans la zone de détection (10) de l'unité d'enregistrement d'image (1) est mesurée au moyen d'un capteur de distance (3),
b) au moins un plan de netteté avec une valeur de distance de plan de netteté ($a_k$) correspondant à la distance de l'objet (d) calculée est calculé,
c) au moins un enregistrement d'image ($B_j$) d'un ou plusieurs doigts ($F_i$), qui se trouvent dans la zone de détection (10) de l'unité d'enregistrement d'image (1), est établi avec l'unité d'enregistrement d'image (1) dans le plan de netteté calculé précédemment,
d) en raison de la valeur de distance de plan de netteté ($a_k$) du plan de netteté calculé, une mise à l'échelle au moins d'une partie de l'enregistrement d'image ($B_j$) est entreprise, dans lequel la mise à l'échelle est réalisée à une résolution prédéfinie, en particulier à une densité de points prédéterminée, de préférence indiquée en DPI, **caractérisé en ce que**

- la mise à l'échelle est directement proportionnelle à la valeur de distance de plan de netteté ($a_k$) calculée,
- un dispositif de reconnaissance d'empreinte digitale (100), dont la spécification technique, en particulier le paramètre de caméra de l'unité d'enregistrement d'image (1) n'est pas connu au préalable, est utilisé et un tableau de mise à l'échelle est utilisé pour la mise à l'échelle des images de doigt ($FB_{i,j}$) et/ou des empreintes digitales ($FP_{i,j}$) dans l'étape d),
- pour l'établissement du tableau de mise à l'échelle, un calibrage du dispositif de reconnaissance d'empreinte digitale (100) est réalisé avec un modèle de calibrage avec des dimensions connues, et
- **en ce que** pour une pluralité de configurations de lentille de l'unité d'enregistrement d'image (1) et des plans de netteté afférents respectivement avec leurs valeurs de distance de plan de netteté ($a_k$) respectives respectivement

- le modèle de calibrage avec des dimensions connues est déplacé à une distance différente de l'unité d'enregistrement d'image (1) à travers la zone de détection (10) de l'unité d'enregistrement d'image (1),
- dans lequel respectivement des enregistrements d'image du modèle de calibrage sont établis et la distance de l'objet (di) afférente est calculée,
- dans lequel l'enregistrement d'image est calculé, dont la qualité est reconnue à l'aide d'au moins une mesure de qualité prédéfinie comme optimale, dans lequel en particulier l'enregistrement d'image classée relativement la plus nette est reconnu comme optimal,
- dans lequel pour l'enregistrement d'image reconnu comme optimal, un calcul de la résolution d'image, en particulier en DPI, est entrepris sur la base des dimensions connues du modèle de calibrage, et
- dans lequel la résolution d'image calculée de cette manière, en particulier en DPI, est enregistrée conjointement avec la distance de l'objet ($d_{i*}$) afférente à l'enregistrement d'image reconnue comme optimal comme valeur de distance de plan de netteté ($a_k$) du plan de netteté respectif dans le tableau de mise à l'échelle.

2. Procédé selon la revendication 1, dans lequel avant l'étape d)

- au moins une image ($B\hat{}_j$) réduite est calculée par la réduction de la résolution d'au moins un enregistrement d'image ($B_j$) établi à l'étape c),
- la position et/ou la couche d'une ou plusieurs images de doigt ($FB\hat{}_{i,j}$) d'un ou plusieurs doigts ($F_i$) sont calculées dans l'image réduite ($B\hat{}_j$) par la segmentation et l'application d'un algorithme de suivi de contour,
- dans l'enregistrement d'image ($B_j$) établi, les positions de l'image de doigt enregistrée ou de plusieurs images de doigt ($FB_{i,j}$) enregistrées qui correspondent respectivement aux images de doigt ($FB\hat{}_{i,j}$) calculées dans l'image réduite ($B\hat{}_j$), sont calculées par extrapolation et
- dans l'étape d), les parties ainsi calculées de l'enregistrement d'image ($B_j$), dans lesquelles l'image de doigt ($FB_{i,j}$) enregistrée d'un doigt ($F_i$) a été calculée, sont mises à l'échelle,

dans lequel il est en particulier prévu que les parties de l'enregistrement d'image ($B_j$), dans lesquelles aucune image de doigt ($FB_{i,j}$) d'un doigt ($F_i$) n'a été calculée, sont rejetées.

3. Procédé selon la revendication 1 ou 2, dans lequel après l'étape d), une conversion des images de doigt ($FB_{i,j}$) enregistrées est entreprise dans un format d'empreinte digitale, dans lequel les empreintes digitales ($FP_{i,j}$) ainsi converties reproduisent les images des crêtes papillaires ($R_1$, ..., $R_4$) des doigts ($F_i$), en particulier sous la forme d'une image de couleur grise numérique.

4. Procédé selon l'une quelconque des revendications précédentes, dans lequel entre l'étape c) et l'étape d)

- une suite d'enregistrements d'image ($B_j$) est établie, dans lequel les enregistrements d'image ($B_j$) sont enregistrés par l'unité d'enregistrement d'image (1) avec différentes valeurs de distance de plan de netteté ($a_k$),

- dans lequel les valeurs de distance de plan de netteté ($a_k$) se trouvent dans un intervalle de valeur de distance prédéfini autour de la distance de l'objet (d) calculée dans l'étape a) et sont espacées les unes par rapport aux autres dans des incréments de valeur de distance prédéfinis , et
- dans lequel avec chaque enregistrement d'image ($B_j$), la valeur de distance de plan de netteté ($a_k$) respectivement afférente est enregistrée,

- une pile d'image est établie à partir des enregistrements d'image ($B_j$) établis de la sorte,
- les images de doigt ($FB_{i,j}$) et/ ou empreintes digitales ($FP_{i,j}$) sont calculées à partir des enregistrements d'image ($B_{i,j}$) établis et
- l'image de doigt ($FB_{i,j}$) et/ou l'empreinte digitale ($FP_{i,j}$) est calculée en particulier individuellement pour chaque doigt ($F_i$) enregistré, dont la qualité est reconnue à l'aide d'au moins une mesure de qualité prédéfinie comme optimale,

- dans lequel il est en particulier prévu que pour la fixation de la mise à l'échelle dans l'étape d), la valeur de distance de plan de netteté ($a_k$) de l'image de doigt ($FB_{i,j^*}$) et/ou empreinte digitale ($FP_{i,j^*}$) reconnue comme optimale est utilisée.

5. Procédé selon la revendication 4, dans lequel comme mesure de qualité pour le calcul des images de doigt ($FB_{i,j^*}$) et/ou empreintes digitales ($FP_{i,j^*}$) optimales dans la pile d'image

- la netteté d'image est utilisée, dans lequel un classement relatif d'images de doigt ($FB_{i,j}$) et/ou empreintes d'image ($FP_{i,j}$) sélectionnées, en particulier toutes, d'une pile d'image est entrepris à l'aide de leur netteté d'image et/ou
- la fréquence de crêtes papillaires (f) est utilisée,

- dans lequel la fréquence de crêtes papillaires (f) pour chaque image de doigt ($FB_{i,j}$) et/ou chaque empreinte digitale ($FP_{i,j}$) est calculée et
- dans lequel il est vérifié si la fréquence de crête papillaire (f) calculée pour l'image de doigt ($FB_{i,j}$) respective et/ou l'empreinte digitale ($FP_{i,j}$) respective se trouve dans l'intervalle de fréquence prédéfinie et
- dans lequel l'image de doigt ($FB_{i,j}$) respective et l'empreinte digitale ($FP_{i,j}$) respective est rejetée lorsque la fréquence de crête papillaire calculée (f) se trouve en dehors de l'intervalle de fréquence et/ou

- la valeur NFIQ 2.0 est utilisée,

- dans lequel pour des images de doigt ($FB_{i,j}$) et/ou empreintes digitales ($FP_{i,j}$) sélectionnées, une valeur NFIQ. 2.0 est calculée entre 0 et 100 en utilisant la valeur de distance de plan de netteté ($a_k$) calculée dans l'étape c) et des images de doigt ($FB_{i,j}$) et/ou empreintes digitales ($FP_{i,j}$) mises à l'échelle dans l'étape d) et
- dans lequel l'image de doigt ($FB_{i,j}$) et/ou l'empreinte digitale ($FP_{i,j}$) est rejetée lorsque la valeur NFIQ 2.0 calculée se trouve en dessous d'une valeur seuil prédéfinie.

6. Procédé selon la revendication 5, dans lequel la fréquence de crête papillaire (f) est calculée dans au moins une fenêtre (OW) rectangulaire ou carrée dans une image de doigt ($FB_{i,j}$) et/ou empreinte digitale ($FP_{i,j}$) d'un doigt ($F_i$),

- dans lequel dans l'image de doigt ($FB_{i,j}$) et/ou empreinte digitale ($FP_{i,j}$) les images de crêtes papillaires ($R_1$, ..., $R_4$) sont calculées à l'aide des valeurs de luminosité détectées avec les pixels individuels de l'unité d'enregistrement d'image (1),
- dans lequel le centre de la fenêtre (OW) est fixé comme origine d'un système de coordonnées en deux dimensions dans le plan de l'image de doigt ($FB_{i,j}$) et/ou empreinte digitale ($FP_{i,j}$), un axe de coordonnées du système de coordonnées est fixé orthogonalement au sens local des crêtes papillaires ($R_1$, ..., $R_4$) et l'autre axe de coordonnées est fixé parallèlement au sens local des crêtes papillaires ($R_1$,..., $R_4$),
- le nombre de crêtes papillaires ($R_1$, ..., $R_4$) est calculé dans une longueur d'unité prédéfinie orthogonalement au sens local des crêtes papillaires ($R_1$, ..., $R_4$) dans la fenêtre (OW) à l'aide des valeurs de luminosité, et
- la fréquence de crête papillaire (f) est calculée comme l'inverse du nombre de crêtes papillaires ($R_1$, ..., $R_4$) par longueur d'unité prédéfinie orthogonalement au sens local des crêtes papillaires ($R_1$, ..., $R_4$).

7. Procédé selon la revendication 5 ou 6, dans lequel pour chaque doigt, l'image de doigt ($FB_{i,j}$) et/ou l'empreinte digitale ($FP_{i,j}$) d'une pile d'image est reconnue comme optimale,

- dont la fréquence de crêtes papillaires (f) se situe au sein de l'intervalle de fréquence prédéterminé, et/ou
- dont le classement est relativement le plus net, et/ou
- dont la valeur NFIQ. 2.0 déterminée est supérieure à la valeur seuil prédéterminée.

8. Procédé selon la revendication 7, dans lequel à l'étape d), la mise à l'échelle à une résolution prédéfinie, en particulier supérieure ou égale à 500 DPI, est réalisée individuellement pour chaque image de doigt ($FB_{i,j}$) et/ou chaque empreinte digitale ($FP_{i,j}$).

9. Procédé selon l'une quelconque des revendications précédentes, dans lequel pour la sélection de la valeur de distance de plan de netteté ($a_k$) à l'aide de la distance de l'objet ($d_i$) mesurée, un tableau de distance de l'objet de plan de netteté est utilisé,

- dans lequel pour déterminer le tableau de distance de l'objet de plan de netteté, un calibrage du dispositif de reconnaissance d'empreintes digitales (100) est réalisé avec un modèle de calibrage,
- dans lequel pour une pluralité de configurations de lentille connues de l'unité d'enregistrement d'image (1) et des plans de netteté afférents respectivement avec leurs valeurs de distance de plan de netteté ($a_k$) respectives respectivement

- le modèle de calibrage est déplacé à une distance différente de l'unité d'enregistrement d'image (1) à travers la zone de détection (10) de l'unité d'enregistrement d'image (1),
dans lequel respectivement des enregistrements d'image du modèle de calibrage sont réalisés et la distance d'objet ($d_i$) correspondante est déterminée,
- dans lequel l'enregistrement d'image, dont la qualité est reconnue comme optimale à l'aide d'au moins une mesure de qualité prédéterminée, est déterminé, dans lequel en particulier l'enregistrement d'image classé relativement le plus net est reconnu comme optimal, et
- dans lequel la distance de l'objet ($d_{i^*}$) afférente à l'enregistrement d'image reconnue comme optimale est enregistrée comme la valeur de distance de plan de netteté ($a_k$) du plan de netteté respectif conjointement avec la configuration de lentille afférente dans le tableau de distance d'objet de plan de netteté.

10. Procédé selon l'une quelconque des revendications précédentes, dans lequel à la suite de la mise à l'échelle de l'étape d), un enregistrement des images de doigt ($FB_{i,j}$) et/ou des empreintes digitales ($FP_{i,j}$) est réalisé, dans lequel

- une limitation rectangulaire (BB), en particulier une Bounding Box, de préférence avec deux bords parallèles à l'axe longitudinal de l'image de doigt ($FB_{i,j}$) ou de l'empreinte digitale ($FP_{i,j}$) du doigt ($F_i$) et deux bords perpendiculaires à l'axe longitudinal de l'image de doigt ($FB_{i,j}$) ou de l'empreinte digitale ($FP_{i,j}$) du doigt ($F_i$), est définie pour chaque image de doigt ($FB_{i,j}$) et/ou chaque empreinte digitale ($FP_{i,j}$), et
- une rotation, pour laquelle la limitation rectangulaire de la zone d'image est la plus petite, est déterminée et appliquée à la limitation (BB) respective, en particulier à la Bounding Box.

11. Support de données lisible par ordinateur comprenant des ordres qui, lorsqu'ils sont réalisés par un ordinateur qui est relié à un capteur de distance (3) et une unité d'enregistrement d'image (1), incitent l'ordinateur à réaliser le procédé selon l'une quelconque des revendications 1 à 10.

12. Dispositif de reconnaissance d'empreinte digitale (100) pour la détection d'empreintes digitales, en particulier réalisé comme terminal portable mobile, comprenant une unité d'enregistrement d'image (1), dans lequel la netteté de l'unité d'enregistrement d'image (1) peut être réglée sur une pluralité de plans de netteté,

- un capteur de distance (3), dans lequel le capteur de distance est prévu pour la détermination de la distance de l'objet (d) entre l'unité d'enregistrement d'image (1) et un ou plusieurs doigts ($F_i$) dans la zone de détection (10) de l'unité d'enregistrement d'image (1),
- une unité de traitement (2) réalisée pour la réalisation d'un procédé selon l'une quelconque des revendications 1 à 10 et/ou contenant un support de données selon la revendication 11.

Fig. 1

Fig. 2a

Fig. 2b

Fig. 2c

Fig. 2d

Fig. 2e

Fig. 3a

Fig. 3b

Fig. 3c

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2506189 A2

- WO 2018031900 A1

**In der Beschreibung aufgeführte Nicht-Patentliteratur**

- **C. STEIN ; C. NICKEL ; C. BUSCH.** Fingerphoto recognition with smartphone cameras. *In Proc. Conf. Biometrics Special Interest Group (BIOSIG),* September 2012, 1-12
- An improved 3-step contactless fingerprint image enhancement approach for minutiae detection. **LIU, XINWEI et al.** Visual Information Processing (EU-VIP), 2016 6th European Workshop on Visual Information Processing. IEEE, 2016

- **ESKICIOGLU, AHMET M. ; PAUL S. FISHER.** Image quality measures and their performance. *IEEE Transactions on communications,* 1995, vol. 43.12, 2959-2965